# EUROPÄISCHE PATENTSCHRIFT

(11) **EP 2 837 981 B1**
(45) Veröffentlichungstag und Bekanntmachung des Hinweises auf die Patenterteilung: **07.06.2017**
(21) Anmeldenummer: 14179307.5
(22) Anmeldetag: 31.07.2014
(51) Int. Cl.: G05B 19/4097

(54) **Verfahren und Vorrichtung zur automatisierten Konfiguration einer Überwachungsfunktion eines Industrieroboters**
Method and device for the automated configuration of a monitoring function of an industrial robot
Procédé et dispositif de configuration automatisée d'une fonction de surveillance d'un robot industriel

(30) Priorität: 14.08.2013 DE 102013216136
(43) Veröffentlichungstag der Anmeldung: 18.02.2015
(73) Patentinhaber: ARTIS GmbH, 21272 Egestorf (DE)
(72) Erfinder: Euhus, Dirk, 29643 Neuenkirchen (DE)
(74) Vertreter: Wegner, Hans

(56) Entgegenhaltungen:
- EP-A2- 0 813 130
- DE-A1-102005 025 338
- DE-B3-102012 207 916

## Beschreibung

### 1. Technisches Gebiet

Die vorliegende Erfindung betrifft ein Verfahren und eine Vorrichtung zur automatisierten Konfiguration einer Überwachungsfunktion für einen Industrieroboter.

### 2. Stand der Technik

Heutzutage werden hohe Anforderungen an die Wirtschaftlichkeit und Produktivität von Fertigungsanlagen gestellt. Auf der anderen Seite bestehen aber gleichzeitig auch hohe Ansprüche an die Qualität der gefertigten Produkte oder Werkstücke. Überdies nimmt die Vielfalt der Werkstücke beständig zu und deren mittlere Losgröße ab. Diese gegenläufigen Zielsetzungen lassen sich zumeist nur durch einen weitgehenden Automatisierungsgrad erreichen.

Werkzeugmaschinen bilden derzeit noch immer die Schlüsselelemente in vielen Produktionsanlagen. Aufgrund ihres Aufbaus in Form eines Maschinengestells, das die auftretenden Bearbeitungskräfte aufnimmt, sind Werkzeugmaschinen in der Lage Werkstücke mit höchster Präzision und hoher Geschwindigkeit zu bearbeiten. Die Bearbeitungsgenauigkeit oder die Präzision zerspanender Werkzeugmaschinen hängt von der Maschinenart ab und reicht bis in den Bereich von einigen Mikrometern. Ultrapräzisionsmaschinen erreichen den einstelligen Nanometerbereich. Der Preis für die Präzision sind zum einen hohe Kosten und zum anderen eine inhärente Inflexibilität beim Einsatz von Werkzeugmaschinen.

Industrieroboter (IR) wurden ursprünglich als Handhabungsgeräte konzipiert, d.h. als Geräte, die ein Werkstück in eine definierte Lage im Raum bringen und/oder in dieser Position vorübergehend halten oder die mit einem Werkzeug eine definierte Bewegung ausführen, um eine Arbeitsaufgabe durchzuführen. Ein IR weist Hardware-seitig zumindest zwei charakteristische Komponenten auf, die ihn von einer Werkzeugmaschine unterscheiden: (a) Zum einen einen Roboterarm oder einen Manipulator, der aus einer Reihe von starren Gliedern besteht, die durch Dreh- oder Schubgelenke verbunden sind und zum anderen (b) einen Effektor oder eine Hand. Der Manipulator weist häufig fünf oder sechs Rotations- bzw. Translationsachsen auf und kann damit den Effektor in jede beliebige Position innerhalb des Arbeitsraums des IR bringen. Der Effektor stellt die Verbindung zwischen einem Werkstück oder einem Werkzeug und einem IR her. Die Aufgabe des Industrieroboters ist es, den Effektor geeignet im Raum zu führen. Falls ein IR ein Werkstück mittels eines Werkzeugs bearbeitet, umfasst der Effektor ein Werkzeughalte- oder Werkzeugspannsystem. Es ist auch möglich, dass der Effektor des IR ein Werkstück relativ zu einem ortsfesten Werkzeug bewegt.

Aufgrund der in Reihe liegenden Lager des Roboterarms addieren sich die Lagerspiele eines Manipulators eines IR zu minimalen Bahnabweichungen. Überdies weist das Spannen der Bearbeitungswerkzeuge oder des Werkstücks ebenfalls Toleranzen auf.

Aufgrund ihres Designs sind IR flexibel einsetzbar und können gut mit einer großen Werkzeug- und Werkstückvielfalt umgehen. Bisher reichte die Präzision der Werkzeughandhabung durch Industrieroboter jedoch oft für die Bearbeitung von Werkstücken nicht aus. Inzwischen haben bestimmte Industrieroboter jedoch insbesondere durch ein spezielles Steifigkeitsdesign eine Bearbeitungsgenauigkeit erreicht, die im Bereich einiger Zehntelmillimeter liegt. Damit sind IRs nun zunehmend in der Lage einfache Zerspannungsaufgaben oder Vor- und/oder Nachbearbeitungsschritte der Werkstückbearbeitung auszuführen.

Eine automatisierte Fertigung mittels Industrierobotern kann jedoch beim Auftreten eines Fehlers in kurzer Zeit zu einer großen Ausschussmenge führen, wenn der Fehler nicht oder nicht rechtzeitig erkannt wird. Es ist deshalb notwendig, einen automatisierten Betrieb eines IR durch Sensorsysteme in Echtzeit zu überwachen, um beim Auftreten eines Fehlers schnell und situationsangemessen reagieren zu können.

Überdies hat der Zustand des Werkzeugs, das zur Bearbeitung eines Werkstücks eingesetzt wird, einen wesentlichen Einfluss auf die Qualität des zu fertigenden Werkstücks. Darüber hinaus steigt für ein stark abgenutztes Werkzeug die Wahrscheinlichkeit für dessen Bruch stark an. Wird in automatisierten Fertigungseinrichtungen, die Industrieroboter einsetzen, ein fehlendes oder gebrochenes Werkzeug nicht oder nicht rechtzeitig erkannt, kann dies zu hohen Ausschussraten führen. Im schlimmsten Fall werden fehlerbehaftete Werkstücke oder Bauteile in ein Endprodukt eingebaut, was hohe Schäden auf der Kundenseite zur Folge haben kann.

Die angesprochene Problematik gilt in gleichem Maße, wenn nicht korrekte Werkstücke nicht oder nicht rechtzeitig erkannt werden und somit durch die weitere Fertigungslinie bearbeitet werden. Diese müssen am Ende der Bearbeitung verworfen werden oder werden fälschlicherweise in einem Endprodukt verbaut. Es ist daher sehr wichtig, solche Fehlerquellen rechtzeitig zu erkennen und zu beseitigen.

Im Bereich der Werkzeugmaschinen gibt es derzeit bereits eine Anzahl von Systemen und Vorrichtungen zur Werkzeugüberwachung. Diese Systeme basieren auf der direkten oder indirekten Messung der bei der Zerspanung umgesetzten Leistung. Zur indirekten Messung des Drehmoments zur Werkzeugüberwachung können beispielsweise Sensoren auf der Basis von Piezoquarzen auf dem Werkzeug angebracht werden, wie dies zum Beispiel in der Offenlegungsschrift DE 29 06 892 ausgeführt ist. Die Patentschrift DE 10 2006 030 834 A1 und die Offenlegungsschrift DE 10 2004 051 145 A1 der Anmelderin beschreiben wie Signale, die von verschiedenen auf der Spindel der Werkzeugmaschine angeordneten Sensoren aufgenommen werden, drahtlos an eine ortsfeste Empfangseinheit übertragen werden können.

Moderne CNC (Computerized Numerical Control) oder NC (Numerical Control) Maschinen weisen eine Speicher-programmierbare Steuerung (SPS) (englisch: PLC für Programmable Logic Controller) oder eine Anpassungssteuerung auf.

Industrieroboter weisen eine Robotersteuerung auf, die eine komplexe Programmierumgebung umfassen kann. Derzeit gibt es keine Systeme und Vorrichtungen zur Werkzeugüberwachung auf Industrieroboter. In einer Fertigungsumgebung ist die Robotersteuerung häufig an eine SPS angeschlossen. Die SPS regelt das Zusammenwirken des IR mit der umgebenden Anlagentechnik. Um Industrieroboter als Bearbeitungsmaschinen einzusetzen, ist es deshalb sinnvoll, diese so auszustatten, dass diese ein Steuerprogramm in Form einer NC ausführen können und sie als CNC IR in einer Fertigungsumgebung zu betreiben.

Moderne Industrieroboter, die zum Überwachen von Werkzeugen und/oder Prozessen eingesetzt werden, verfügen über leistungsfähige Schnittstellen, um Befehle und Daten von dem Überwachungssystem auf einen IR zu übertragen.

Ein Überwachungssystem kommuniziert direkt oder über eine SPS mit dem Industrieroboter und überträgt über diese Schnittstelle einen Teil seines Steuerbefehlssatzes an die Steuerung des IR. Ein zweiter Teil der Steuerbefehle des Überwachungssystems ist spezifisch für das Überwachungssystem und somit der Steuerung des Industrieroboters nicht bekannt. Schließlich ist ein dritter Teil der Steuerbefehle von dem durch den Industrieroboter auszuführenden Prozess und/oder dem zu bearbeitenden Werkstück abhängig.

Deshalb muss das für den IR zuständige Bedienpersonal (d.h. der Maschinenführer oder der Arbeitsvorbereiter) zusätzliche Steuerbefehle oder Überwachungsanweisungen in ein Steuerprogramm des Industrieroboters eintragen, um das Überwachungssystem an den jeweiligen Bearbeitungsvorgang anzupassen. Dies bedeutet einen erheblichen Anpassungsaufwand für das jeweilige Steuerprogramm und ist insbesondere bei langen Steuerprogrammen sehr aufwändig oder sogar unmöglich. Im Ergebnis führt dies häufig dazu, dass das Bedienpersonal das Überwachungssystem des IR gar nicht oder nur unzureichend an den durchzuführenden Bearbeitungsprozess anpasst. Dadurch wird das Überwachungssystem häufig in einem Modus falscher und/oder reduzierter Funktion betrieben. Der erwähnte Trend zunehmender Teilevielfalt und die Tendenz zu längeren Steuerungsprogrammen verstärkt die diskutierte Problematik zusätzlich.

Der vorliegenden Erfindung liegt daher das Problem zugrunde, ein Verfahren und eine Vorrichtung bereitzustellen, mit deren Hilfe eine Überwachungsfunktion möglichst gut auf einen Bearbeitungsprozess abgestimmt werden kann, der von einem Industrieroboter in einer Fertigungsumgebung durchgeführt werden

Als nächstliegender Stand der Technik wird das Dokument EP 0 813 130 betrachtet.

### 3. Zusammenfassung der Erfindung

Dieses Problem wird gemäß einem ersten Aspekt der Erfindung durch ein Verfahren nach Anspruch 1 gelöst. In einer Ausführungsform weist ein Verfahren zum automatisierten Bereitstellen einer Überwachungsfunktion für einen Bearbeitungsprozess, der von einem Industrieroboter durchführt werden soll, folgende Schritte auf: (a) Analysieren eines Computer-Aided Manufacturing (CAM)-Programms des Bearbeitungsprozesses mit Hilfe eines Postprozessors auf Bearbeitungsschritte, die überwacht werden sollen; und (b) Einfügen zumindest einer Überwachungsanweisung in ein Steuerprogramm des Industrieroboters durch den Postprozessor, die beim Durchführen des Bearbeitungsprozesses ausgeführt wird.

Das erfindungsgemäße Verfahren vermeidet das Einstellen einer Überwachungsfunktion oder eines Überwachungssystems eines Industrieroboters für einen speziellen Bearbeitungsprozess in der Fertigungsumgebung. Vielmehr findet das Einstellen der Überwachungsfunktion in einer CAM-Umgebung statt. Ein CAM-System erstellt aus einem dreidimensionalen Modell des Werkstücks ein CAM-Programm, das alle zur Herstellung des Werkstücks aus einem Rohling notwendigen Bearbeitungsschritte beschreibt. In der CAM-Umgebung wird der Bearbeitungsprozess des Werkstücks einmal vollständig durchdacht. Die Erfindung ermöglicht parallel zur Analyse der Bahnen und Geschwindigkeiten der einzelnen Werkzeuge in der CAM-Umgebung die einzelnen Schritte der Überwachung des Bearbeitungsprozesses zu analysieren. Als Folge der identifizierten kritischen Bearbeitungsschritte des Bearbeitungsprozesses kann das Überwachungssystem des Industrieroboters sorgfältig auf die kritischen Schritte des Bearbeitungsprozesses eingestellt werden.

Darüber hinaus definiert das erfindungsgemäße Verfahren einen weitgehend automatisierten Einstellprozess für eine Überwachungsfunktion eines Bearbeitungsprozesses, der von einem Industrieroboter ausgeführt wird. Damit wird sichergestellt, dass menschliches Fehlverhalten den Einstellprozess der Überwachungsfunkton oder eines Überwachungssystems möglichst wenig beeinflussen kann.

Die Erfindung schließt jedoch ein zusätzliches manuelles Eingeben, Ändern oder Löschen von einer oder mehrerer Überwachungsanweisungen in die Steuerung am Industrieroboter selber nicht aus.

Ein weiterer Aspekt weist das Anordnen des Postprozessors in dem CAM-System auf.

Wie bereits oben ausgeführt, ist ein CAM-System die bevorzugte Umgebung, um die Einstellungen des Überwachungssystems für den späteren Fertigungsprozess vorzunehmen. Wenn bereits ein Steuerprogramm für den IR vorliegt, ist es jedoch auch möglich, in dem Industrieroboter oder in einem anderen entsprechend vorbereiteten Computersystem in einem weitgehend automatisierten Prozess die Überwachungsanweisung(en) nachträglich in das vorhandene Steuerprogramm einzufügen.

Gemäß einem weiteren Aspekt umfasst das Steuerprogramm ein Numerical Control (NC)-Programm, das von dem Postprozessor in dem CAM-System erzeugt wird.

Derzeit ist es bevorzugt, ein Steuerprogramm in Form eines Computerized Numerical Control (CNC)-Programms oder kurz ein NC-Programm in einem Industrieroboter einzusetzen. Allerdings weisen derzeit nur wenige Industrieroboter ein Steuerprogramm in Form eines NC-Programms auf. Das oben beschriebene Verfahren ist jedoch nicht auf eine spezifische Programmiersprache oder eine spezifische Programmierumgebung des Industrieroboters beschränkt. Dies gilt sowohl für das CAM-Programm als auch für das Steuerprogramm des IR.

In einem anderen Aspekt umfasst das Analysieren des Steuerprogramms das Ausführen zumindest eines Analyse-Skripts durch den Postprozessor.

Skripte sind geeignete Werkzeuge um ein CAM-Programm in automatisierter Form nach vorgegebenen Kriterien oder Bedingungen zu untersuchen.

Gemäß einem weiteren Aspekt wertet der Postprozessor beim Analysieren eines CAM-Programms Extensions von Werkzeugpfaden des CAM-Programms und/oder in den Werkzeugpfaden des CAM-Programms vorhandene Nutzer-definierte Eigenschaften aus.

Die Anweisungen zum automatisierten Bereitstellen einer Überwachungsfunktion können in verschiedener Weise in einem CAM-Programm vorhanden sein. Zum Beispiel können diese Anweisungen in Form von Erweiterungen oder Extensions Überschriften von Programmteilen des CAM-Programms hinzugefügt werden, die Werkzeugpfade definieren. In einem anderen Beispiel werden diese Anweisungen in Form eigener Angaben als Nutzer-definierte Eigenschaften oder User Defined Properties den Programmteilen des CAM-Programms hinzugefügt, die Werkzeugpfade beschreiben.

In einem bevorzugten Aspekt betreffen die Extensions der Werkzeugpfade des CAM-Programms und/oder die in Werkzeugpfaden des CAM-Programms vorhandenen Nutzer-definierten Eigenschaften einen Betriebsmodus des Überwachungssystems und/oder eine Qualitätseinstellung des Überwachungssystems und/oder ein Erzeugen eines Alarmereignisses.

Nach einem weiteren Aspekt aktiviert oder deaktiviert der Betriebsmodus das Überwachungssystem. Gemäß einem anderen Aspekt aktiviert oder deaktiviert der Betriebsmodus einen passiven Überwachungsmodus oder aktiven adaptiven Überwachungsmodus.

In einem aktiven adaptiven Überwachungsmodus ist neben dem Überwachen eines Bearbeitungsschritts die primäre Zielsetzung des Überwachungssystems die Optimierung der Zykluszeit des Bearbeitungsprozesses. In einem passiven Überwachungsmodus optimiert das Überwachungssystem in erster Linie oder ausschließlich die Qualitätskontrolle des Bearbeitungsprozesses.

Nach noch einem anderen Aspekt umfasst die Qualitätseinstellung mehrere Qualitätslevel, insbesondere einen niedrigen, einen mittleren und einen hohen Qualitätslevel. Gemäß einem weiteren Aspekt umfasst das Alarmereignis einen unmittelbaren Stopp des Industrieroboters, einen verzögerten Stopp des Industrieroboters und/oder keinen Stopp des Industrieroboters. In einem anderen Aspekt umfasst das Erzeugen des Alarmereignisses ein Weitergeben des Alarmereignisses von dem Überwachungssystem an den Industrieroboter.

In einem Ausführungsbeispiel umfassen die Extensions der Werkzeugpfade des CAM-Programms und/oder die in Werkzeugpfaden des CAM-Programms vorhandenen Nutzer-definierten Eigenschaften Fertigungsvorgaben und/oder Parameterwerte zum Bestimmen von zumindest einer Einstellung des Überwachungssystems.

In den bisher ausgeführten Aspekten bekommt ein Überwachungssystem seine Einstellungen durch die Überwachungsanweisung(en) in dem Steuerprogramm des Industrieroboters mitgeteilt und führt diese Anweisungen einfach aus. In dem im vorhergehenden Absatz beschriebenen Aspekt wird das Überwachungssystem hingegen angewiesen, seine Einstellungen aus bereitgestellten Parameterwerten und/oder von Fertigungsvorgaben selbst zu bestimmen.

Ferner können die Extensions den Werkzeugpfaden oder Programmzeilen des CAM-Programms beim Erzeugen des CAM-Programms aus CAD Daten hinzugefügt werden. Nach einem weiteren Aspekt werden die Steuerbefehle oder Anweisungen für das Überwachungssystem dem CAM-Programm als in Werkzeugpfaden des CAM-Programms vorhandene Nutzer-definierten Eigenschaften bei dessen Erzeugen hinzugefügt.

Wie bereits oben ausgeführt, werden beim Erzeugen des CAM-Programms alle an einem Werkstück durchzuführenden Bearbeitungsschritte analysiert. Es ist deshalb günstig, gleichzeitig mit der Analyse der Bearbeitungsschritte des Herstellungsprozesses eines Werkstücks die Funktion des Überwachungssystems für den jeweiligen Bearbeitungsschritt festzulegen. Dadurch kann eine optimale Synchronisierung von Bearbeitungsprozess und Überwachungsfunktion sichergestellt werden.

Gemäß einem anderen Aspekt werden die Extensions der Werkzeugpfade und/oder die in Werkzeugpfaden des CAM-Programms vorhandenen Nutzer-definierten Eigenschaften aus einer ersten Bibliothek ausgewählt.

Es gibt mehrere Möglichkeiten die Anweisungen zum Einstellen des Überwachungssystems in ein CAM-Programm einzubringen. So ist es möglich, die zu den verschiedenen Extensions gehörenden Einstellungen des Überwachungssystems in einer Bibliothek zu speichern. Beim Erzeugen des CAM-Programms werden neben den Bahnbewegungen der Werkzeuge auch die Vorgaben des Fertigungsprozesses analysiert. Aus der ersten Bibliothek wird die dazu passende Extension und/oder Nutzer-definierte Eigenschaft ausgewählt und als Erweiterung des Programmteils, der den entsprechenden Werkzeugpfad beschreibt, hinzugefügt bzw. als eigene Programmzeile(n) in den entsprechenden Werkzeugpfad des CAM-Programms eingefügt.

In einem weiteren bevorzugten Aspekt schränkt der Anwendungsbereich eines gefertigten Werkstücks das Auswählen der Extensions und/oder der Nutzer-definierten Eigenschaften aus der ersten Bibliothek ein.

Je nach Einsatzgebiet oder Anwendungsbereich (z.B. medizinischer Bereich, Automobilbereich oder Luft- und Raumfahrttechnik) des Werkstücks gibt es unterschiedliche Fertigungsvorgaben für dessen Herstellungsprozess. Diese Vorgaben können in der ersten Bibliothek hinterlegt werden und führen über eine entsprechende Auswahl der Extensions bzw. der Nutzer-definierten Eigenschaften zu einer Berücksichtigung der jeweiligen Fertigungsvorgaben durch den Industrieroboter und das zugehörige Überwachungssystem.

In noch einem anderen bevorzugten Aspekt schränkt eine Bearbeitungsart und/oder ein Werkzeug das Auswählen der Extensions und/oder der Nutzer-definierten Eigenschaften aus der ersten Bibliothek ein.

Unterschiedliche Bearbeitungsarten wie beispielsweise Entgraten, Schleifen, Fräsen, Polieren, Bohren oder Fräsen weisen verschiedene Anforderungen an die Funktionsweise des Überwachungssystems auf. Diese Anforderungen können ebenfalls in der ersten Bibliothek hinterlegt werden und durch Auswählen einer entsprechenden Extension für einen Werkzeugpfad des CAM-Programms und/oder durch in einem Werkzeugpfad des CAM-Programms vorhandene Nutzer definierte Eigenschaften dem Überwachungssystem des Industrieroboters mitgeteilt werden.

Gemäß einem weiteren Aspekt schränkt ein Prozessfortschritt innerhalb eines Bearbeitungsschritts das Auswählen der Extensions und/oder das Auswählen der Nutzer-definierten Eigenschaften aus der ersten Bibliothek ein.

Ein Bearbeitungsschritt eines Bearbeitungsprozesses wird häufig in mehreren aufeinanderfolgenden Teilschritten durchgeführt wie beispielsweise einer Grobbearbeitung und einer anschließenden Feinbearbeitung. Die Anforderungen an eine Überwachungsfunktion sind für die beiden Teilschritte unterschiedlich. Die verschiedenen Anforderungen werden ebenfalls, wie oben beschrieben, in einer Bibliothek abgelegt.

Nach noch einem anderen Aspekt werden die Extensions und/oder die Nutzer-definierten Eigenschaften des CAM-Programms automatisch erzeugt oder manuell hinzugefügt.

Wie bereits oben erläutert, kann eine Extension und/oder eine Nutzer-definierte Eigenschaft aus einer ersten Bibliothek ausgewählt werden und automatisch als Erweiterung oder Extension an einen entsprechenden Werkzeugpfad eines CAM-Programms angefügt werden oder die Nutzer-definierte Eigenschaft kann als eigene Programmzeile in das CAM-Programm eingefügt werden.

Alternativ kann die Person, die die Erzeugung des CAM-Programms überwacht oder selbst durchführt, die Extensions und/oder die Nutzer-definierten Eigenschaften zum Einstellen des Überwachungssystems manuell in die erzeugten Werkzeugpfade des CAM-Programms eintragen. Dabei kann sie auf die oben beschriebene Bibliothek und/oder ihr Expertenwissen zurückgreifen. Darüber hinaus ist es ferner möglich, dass ein Teil der Erweiterungen und/oder der Nutzer-definierten Eigenschaften automatisch in das CAM-Programm bei dessen Generierung eingefügt wird und ein anderer Teil manuell nachträglich hinzugefügt wird.

In noch einem weiteren Aspekt umfasst das Einfügen zumindest einer Überwachungsanweisung in ein Steuerprogramm des Industrieroboters das Ausführen zumindest eines Einfüge-Skripts durch den Postprozessor.

Gemäß einem anderen Aspekt umfasst das Einfügen der zumindest einen Überwachungsanweisung in das Steuerprogramm das Einfügen zumindest einer H-Funktion und/oder zumindest einer M-Funktion in das Steuerprogramm.

In dem oben genannten Aspekt umfasst das Steuerprogramm ein NC-Programm in Form von G-Code gemäß der DIN 66025. Die G-Funktion des G-Codes beschreibt inkrementelle Bewegungen der Koordinatenachsen, d.h. einer oder mehrerer Achsen des IR. Die M-Funktion oder H-Funktion beschreibt Aktions-Codes. Diese Funktionen können zum Einstellen oder Synchronisieren eines Überwachungssystems eines von einem Industrieroboter ausgeführten Bearbeitungsprozesses verwendet werden.

Gemäß einem weiteren Aspekt umfasst das Einfügen der zumindest einen Anweisung das Einfügen zumindest einer H-Funktion und/oder zumindest einer M-Funktion am Beginn eines Bearbeitungsprozessschrittes und das Aufheben der zumindest einen H-Funktion und/oder der zumindest einen M-Funktion am Ende des Bearbeitungsprozessschrittes.

Nach einem anderen Aspekt ist einer Extension und einer Nutzer-definierten Eigenschaft des CAM-Programms eindeutig zumindest eine Überwachungsanweisung zum Einfügen in das Steuerprogramm des Industrieroboters zugeordnet.

Durch die eindeutige Zuordnung können die Einstellungen eines Überwachungssystems eines Industrieroboters bereits vollständig in dem CAM-Programm festgelegt werden. Eine Anpassung des Steuerprogramms an den Industrieroboter selber ist nicht mehr erforderlich.

In nochmals einem anderen Aspekt erfolgt das Auswählen der zumindest einen Überwachungsanweisung aus einer zweiten Bibliothek, die einer Extension und/oder einer Nutzer-definierten Eigenschaft des CAM-Programms eindeutig zumindest eine Überwachungsanweisung zum Einfügen in das Steuerprogramm des Industrieroboters zuordnet.

Eine Möglichkeit die Extensions und die Nutzer-definierten Eigenschaften von CAM-Programmen, die Konfigurationsdaten einer Überwachungsfunktion oder eines Überwachungssystems eines Werkzeugsystems beschreiben, in Überwachungsanweisungen von Steuerprogrammen für Industrieroboter abzubilden, ist deren Ablage in einer zweiten Bibliothek. In einem Ausführungsbeispiel identifiziert ein Analyse-Skript eine Extension in einem entsprechenden Werkzeugpfad eines CAM-Programms und gibt die Identifikation der Extension an ein Einfüge-Skript weiter. Letztes wählt aus der zweiten Bibliothek die zumindest eine Überwachungsanweisung aus und fügt diese in das Steuerprogramm ein. Zusätzlich oder alternativ erkennt das Analyse-Skript eine in einem Werkzeugpfad des CAM-Programms vorhandene Nutzer-definierte Eigenschaft und das Einfüge-Skript wählt aus der zweiten Bibliothek die zugehörige(n) Überwachungsanweisung(en) aus und fügt diese in das Steuerprogramm für den Industrieroboter ein.

Nach einem alternativen Aspekt erfolgt das Bestimmen der zumindest einen Überwachungsanweisung durch ein externes Applikationsprogramm.

Ein externes Applikationsprogramm wie beispielsweise eine Direct Link Library (DLL) berechnet die zu einer Extension gehörende(n) Überwachungsanweisung(en) und liefert diese an den Postprozessor des CAM-Systems. Das Applikationsprogramm kann von einem Prozessor des CAM-Systems ausgeführt werden oder in einem Prozessor eines anderen Computersystems ablaufen.

Gemäß einem anderen Aspekt weist die zumindest eine Überwachungsanweisung das Überwachungssystem an, Einstellungen des Überwachungssystems aus Anweisungen des Steuerprogramms und/oder aus Parameterwerten, die mit der zumindest einen Überwachungsanweisung übertragen werden, zu bestimmen.

In den bisher angegeben Aspekten erhält das Überwachungssystem seine Einstellungen oder Konfigurationsdaten über die in das Steuerprogram des Industrieroboters eingefügten Überwachungsanweisung(en). Damit agiert das Überwachungssystem als Slave des Steuerprogramms des Industrieroboters. In dem im vorhergehenden Absatz beschriebenen alternativen Ausführungsbeispiel erhält das Überwachungssystem mittels der Überwachungsanweisung hingegen die Aufforderung seine Einstellungen zum Überwachen des Bearbeitungsprozesses aus den an den Industrieroboter gerichteten Anweisungen des Steuerprogramms und/oder von bereitgestellten Parameterwerten selbst zu bestimmen. Zu diesem Zweck weist das Überwachungssystem einen Prozessor auf, der die Anweisungen des Steuerprogramms lesen und interpretieren kann. Zudem enthält das Überwachungssystem einen nichtflüchtigen Speicher, um aus darin gespeicherten Anweisungen oder Algorithmen die Einstellungen des Überwachungssystems zu bestimmen.

Nach noch einem weiteren Aspekt übergibt die zumindest eine Überwachungsanweisung Grenzwerte für einen Variationsbereich für zumindest eine von dem Überwachungssystem zur Überwachung verwendeten Größe. Gemäß einem anderen Aspekt umfassen die Grenzwerte einen festen unteren und/oder einen festen oberen Grenzwert oder eine untere und/oder eine obere Hüllkurve.

Ein nützlicher Aspekt betrifft ferner das Einstellen von Regeleigenschaften des Überwachungssystems nach Vorgaben, die von der zumindest einen Überwachungsanweisung an das Überwachungssystem übergeben werden.

Anhand der erhaltenden Vorgaben kann sich das Überwachungssystem für den von dem Industrieroboter durchgeführten Bearbeitungsprozess bestmöglich selbst konfigurieren.

Ein günstiger Aspekt weist ferner den Schritt des Aktivierens Werkzeugbezogener Einstellungen auf der Grundlage von Werkzeugnummern auf, die durch die zumindest eine Überwachungsanweisung an das Überwachungssystem übertragen werden.

Dies ermöglicht das Realisieren einer Werkzeug-spezifischen Einstellung des Überwachungssystems. Damit kann verhindert werden, dass das Überwachungssystem ungünstige Messgrößen oder abgeleitete Größen zum Überwachen des Bearbeitungsprozesses verwendet.

Ein vorteilhafter Aspekt weist ferner den Schritt des Aktivierens bearbeitungsspezifischer Einstellungen auf der Grundlage der Bearbeitungsart auf, die durch die zumindest eine Überwachungsanweisung an das Überwachungssystem übertragen wird.

Damit kann die am besten geeignete Größe (Messgröße oder abgeleitete Größe) zur Überwachung eines spezifischen Bearbeitungsprozesses beispielsweise eines Fräsprozesses zum Einsatz gebracht werden.

In einem weiteren günstigen Aspekt weist eine Vorrichtung nach Anspruch 12 zum automatisierten Bereitstellen einer Überwachungsfunktion für einen Bearbeitungsprozess, der von einem Industrieroboter ausgeführt werden soll, auf: (a) Mittel zum Analysieren eines Computer-Aided Manufacturing (CAM)-Programms des Bearbeitungsprozesses mit Hilfe eines Postprozessors auf Bearbeitungsschritte, die überwacht werden sollen, und (b) Mittel zum Einfügen zumindest einer Überwachungsanweisung in ein Steuerprogramm des Industrieroboters durch den Postprozessor, die beim Durchführen des Bearbeitungsprozesses ausgeführt wird.

Nach einem anderen Aspekt umfassen die Mittel zum Analysieren des CAM-Programms und die Mittel zum Einfügen der zumindest einen Überwachungsanweisung einen Prozessor. Gemäß einem weiteren Aspekt ist der Prozessor in einem CAM-System angeordnet. In noch einem anderen Aspekt erzeugt der Prozessor durch Ausführen des Postprozessors aus dem CAM-Programm das Steuerprogramm für den Industrieroboter.

In einem vorteilhaften Aspekt ist die oben angegebene Vorrichtung ausgebildet, um ein Verfahren nach einem der oben aufgeführten Aspekte auszuführen.

Schließlich umfasst in einem besonders bevorzugten Aspekt ein Computerprogramm nach Anspruch 15 Anweisungen zum Durchführen aller Schritte des Verfahrens nach einem der oben angegebenen Aspekte, wenn das Computerprogramm in einer erfindungsgemäßen Vorrichtung ausgeführt wird.

### 4. Kurze Beschreibung der Zeichnungen

In der nachfolgenden detaillierten Beschreibung werden derzeit bevorzugte Ausführungsbeispiele der vorliegenden Erfindung unter Bezugnahme auf die begleitenden Figuren erläutert, wobei
- Fig. 1: eine schematische Darstellung einiger Komponenten eines Industrieroboters (IR), eines Werkstücks und ein Überwachungssystem nach dem Stand der Technik zeigt;
- Fig. 2: schematisch den Generierungsprozess eines Steuerprogramms für einen Industrieroboter mit angeschlossenem Überwachungssystem nach dem Stand der Technik veranschaulicht;
- Fig. 3: schematisch den Herstellungsprozess eines Steuerprogramms für den in der Fig. 2 darstellten IR gemäß einem Ausführungsbeispiel eines in der vorliegenden Anmeldung beschriebenen Verfahrens repräsentiert;
- Fig. 4: einen Ausschnitt aus einem CAM-Programm wiedergibt, bei beim zwei Programmzeilen verschiedene Extensions aufweisen;
- Fig. 4a: ein Beispiel für ein Makro angibt, das für den Werkzeugpfad '1' die Nutzer-definierte Eigenschaft PM_Adaptive_Control erstellt und durch Zuweisung des Wertes 'On' aktiviert;
- Fig. 4b: eine Dialog-Oberfläche eines CAM-Programms veranschaulicht, in der Nutzer-definierte Eigenschaften aufgeführt sind;
- Fig. 5: eine Tabelle darstellt, die Extensions für die drei Merkmale aktive Kontrolle, Qualitätslevel und Alarmverhalten auflistet;
- Fig. 6: ein Beispiel eines Bearbeitungsschrittes eines Bearbeitungsprozesses wiedergibt, bei dem der Qualitätslevel des Überwachungssystems niedrig eingestellt ist;
- Fig. 7: den Bearbeitungsprozess der Fig. 6 zeigt, bei dem der Qualitätslevel des Überwachungssystems hoch eingestellt ist;
- Fig. 8: ein Beispiel eines Bearbeitungsschritts eines Bearbeitungsprozesses darstellt, der mit eingeschalteter aktiver Kontrolle durchgeführt wird und an Hand eines konstanten oberen Grenzwertes überwacht wird;
- Fig. 9: den in der Fig. 8 wiedergegebenen Bearbeitungsschritt wiedergibt, wenn die aktive Kontrolle ausgeschaltet ist und der Bearbeitungsschritt mit einer oberen Hüllkurve und hohem Qualitätslevel überwacht wird;
- Fig. 10: den Teil der Tabelle der Fig. 5 repräsentiert, aus dem Extensions zum Überwachen eines vorher zertifizierten Prozesses ausgewählt werden können (nicht schwarz eingerahmter Teil);
- Fig. 11: den Teil der Tabelle der Fig. 5 zeigt, aus dem Extensions zum Einstellen eines Überwachungssystems ausgewählt werden können, wenn die primäre Zielsetzung der Überwachung des Bearbeitungsschritts die Minimierung seiner Zykluszeit ist (nicht schwarz eingerahmter Teil);
- Fig. 12: den Teil der Tabelle der Fig. 5 darstellt, aus dem Extensions zum Überwachen eines Gewindeschneideprozesses ausgewählt werden können (nicht schwarz eingerahmter Teil); und
- Fig. 13: einen Ausschnitt aus einem Steuerprogramm eines Industrieroboters zeigt, bei dem auf Grund einer Extension mit der Kennung 02 in der Tabelle der Fig. 5 vier Programmzeilen mit Überwachungsanweisungen (durch gestrichelte Rechtecke hervorgehoben) in das Steuerprogramm eingefügt sind.

### 5. Detaillierte Beschreibung bevorzugter Ausführunsgbeispiele

Im Folgenden werden gegenwärtig bevorzugte Ausführungsbeispiele des erfindungsgemäßen Verfahrens und der erfindungsgemäßen Vorrichtung zum automatisierten Bereitstellen einer Überwachungsfunktion für einen von einem Industrieroboter (IR) ausgeführten Bearbeitungsprozess genauer erläutert. Diese beispielhaften Erläuterungen werden im Zusammenhang mit einem Industrieroboter beschrieben, der als Effektor eine Spindel mit einem Werkzeug aufweist. Es ist jedoch auch möglich, dass der IR ein Werkstück relativ zu einem ortsfesten, beispielsweise einem rotierenden Werkzeug bewegt. Ferner kann ein hier beschriebenes Verfahren neben einem Einsatz des IR als Werkzeugmaschine auch zum Überwachen beliebiger von einem IR auszuführender Aufgaben eingesetzt werden.

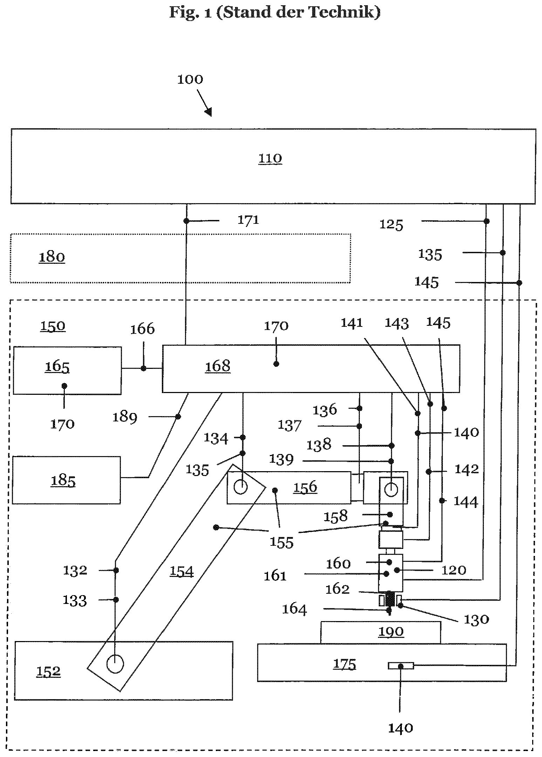

Die Fig. 1 zeigt eine Kombination 100 eines Überwachungssystems 110 und einiger Komponenten eines beispielhaften Industrieroboters 150. Das Beispiel eines IR 150, der in der Fig. 1 dargestellt ist, umfasst einen ortsfesten aber drehbaren Fuß 152, einen Manipulator 155 und einen Effektor 160. Der Manipulator oder Roboterarm 155 umfasst in dem dargestellten Beispiel die Glieder 154, 56 und 158. Die einzelnen Glieder 154, 156 und 158 sind gegeneinander drehbar. Die beiden Glieder 156 und 158 sind zusätzlich um deren Längsachse drehbar. Ferner können die Glieder 156 und 158 des Manipulators 155 in ihrer Länge veränderbar sein. In dem in der Fig. 1 dargestellten beispielhaften IR 150 ist der Effektor 160 in Form einer Spindel oder einer Maschinenspindel 161 ausgeführt. Die Werkzeugaufnahme 162 der Spindel 161 nimmt ein Werkzeug 164 auf. In dem in der Fig. 1 dargestellten Beispiel trägt die Spindel 161 einen Fräser 164. Das Werkzeug 164 des IR 150 ist jedoch nicht auf den Einsatz eines Fräsers 164 beschränkt. Vielmehr kann die Werkzeugaufnahme 162 der Spindel 161 alle Arten rotierender Werkzeuge 164 aufnehmen, wie beispielsweise Bohrer, Polierer, Räumwerkzeuge, Entgrater oder Gewindeschneider (in der Fig. 1 nicht gezeigt). Es ist ferner möglich, dass der Effektor 160 nicht als Maschinenspindel 161 ausgeführt ist und feststehende Werkzeuge aufnimmt (in der Fig. 1 ebenfalls nicht angegeben).

Wie bereits oben erwähnt, kann der Effektor 160 ausgebildet sein, um ein Werkstück 190 aufzunehmen und dieses relativ zu einem ortsfesten Werkzeug während eines Bearbeitungsprozesses zu bewegen. Ferner ist es denkbar, dass während eines Bearbeitungsvorgangs sowohl das Werkstück 190 durch den Effektor 160 des IR 150 als auch das Werkzeug bewegt werden (in der Fig. 1 nicht dargestellt).

Der IR 150 weist einen Speicher 165 und einen Prozessor 168 auf, die über die Verbindung 166 miteinander in Datenaustausch stehen. Der Speicher 165, der vorzugsweise ein nicht-flüchtiger Speicher ist, speichert ein Steuerprogramm 170, das der Prozessor 168 während des Betriebs des IR 150 ausführt. Als Prozessor 168 kann ein beliebiger Prozessortyp Verwendung finden; derzeit werden häufig Mikroprozessoren zum Einsatz gebracht.

Das Steuerprogramm 170 kontrolliert die Bewegungen des IR 150. Damit das Steuerprogramm 170 den Betrieb des IR 150 steuern und kontrollieren kann, ist der Prozessor 168 mit einem Sensor und einem Aktuator des Fußes 152 über die Verbindungen 132 und 133 verbunden. Der Fuß des IR 150 weist zumindest einen Sensor und einen Aktuator auf; er kann jedoch auch mehrere Sensoren und Aktuatoren umfassen.

Ferner weist der Prozessor 168 in dem in der Fig. 1 dargestellten Beispiel Verbindungen 134, 135, 136, 137, 138, 139, 140, 141, 142 und 143 zu den Aktuatoren und Sensoren des Manipulators 155 auf. Über die Verbindungen 144 und 145 steuert der Prozessor 168 bzw. das Steuerprogramm 170 den Effektor 160. Ähnlich wie der Fuß 152 des IR 152 kann der Effektor 160 mehrere Sensoren und Aktuatoren aufweisen. Die Aktuatoren und Sensoren des IR 150 sind in der Fig. 1 nicht wiedergegeben. Ferner sind in der Fig. 1 aus Übersichtlichkeitsgründen jeweils eine Verbindung zu einem Sensor und einem Aktuator als eine Verbindung veranschaulicht.

Die Aktuatoren können beispielsweise als elektrische Stellantriebe ausgeführt werden. Diese werden von dem im Prozessor 168 ablaufenden Steuerprogramm 170 über die Verbindungen 133, 135, 137, 139, 141 und 143 angesteuert. Andere Antriebe etwa in Form einer Hydraulik sind ebenfalls einsetzbar. Sowohl die Sensoren des Manipulators 155 wie auch des Effektors 160 des IR 150 können in Form inkrementeller Drehgeber, Interferenzmuster oder Lichtschrankenfunktionen ausgeführt werden. Die Industrieroboter-internen Sensoren geben ihre Messdaten über die Verbindungen 132, 34, 136, 138, 140, 142 und 144 an das Steuerprogramm 170.

In dem in der Fig. 1 dargestellten Beispiel steuert das im Prozessor 168 ablaufende Steuerprogramm 170 über die Verbindungen 132 und 133 des Fußes 152 des IR 150 und die Verbindungen 134, 135, 136, 137, 138, 139, 140, 141, 142, 143, 144 und 145 des Manipulators 155 des IR 150 alle Vorschubbewegungen des Werkzeugs 164 parallel und senkrecht zur Oberfläche des Werkstücks 190. Im Beispiel der Fig. 1 steuert das im Prozessor 168 ablaufende Steuerprogramm über die Verbindungen 144 und 145 die Drehzahl der Spindel 161 und damit des Werkzeugs 164. Ein in der Spindel 161 angebrachter Sensor meldet über die Verbindung 144 die aktuelle Drehzahl der Spindel 161 bzw. die Winkellage der Spindel 161 an das im Prozessor 168 ablaufende Steuerprogramm. Die Verbindungen 132, 133, 134, 135, 136, 137, 138, 139, 140, 141, 142, 143, 144 und 145 zwischen dem Prozessor 168 und dem Fuß 152, dem Manipulator 155 und dem Effektor 160 des IR 150 können festverdrahtet sein oder die Signale können zwischen den Komponenten 152, 155 und 160 des IR 150 und dem Prozessor 168 drahtlos übertragen werden.

Die Position des Werkzeuges 164 eines IR wird über seinen Tool Center Point (TCP) definiert. Der TCP ist ein Referenzpunkt, der sich an einer spezifizierten Stelle des Werkzeugs 164 befindet. Das Steuerprogramm 170 führt einen Abgleich der Soll- und Ist-Position des TCP aus und steuert dadurch die dreidimensionale Position und Lage des Werkzeugs 164 bezüglich eines Bezugspunktes.

Zum Erstellen von Steuerprogrammen von Industrierobotern können verschiedene Verfahren der Online-Programmierung (prozessnah) oder Offline-Programmierung (prozessfern) benutzt werden. Derzeit sind in der Industrie noch Online-Programmierungsverfahren vorherrschend.

Diese Art der Programmierung von Steuerprogrammen erfolgt vor Ort durch sogenanntes "Teachen". Dazu führt ein Operator oder ein Maschinenführer manuell die Bewegungsabläufe des Effektors 160 aus, die dieser während des Bearbeitungsprozesses ausführen soll. Der schwerwiegendste Nachteil der Online-Programmierung liegt darin, dass der IR während des Lernprozesses für Bearbeitungsprozesse nicht zur Verfügung steht.

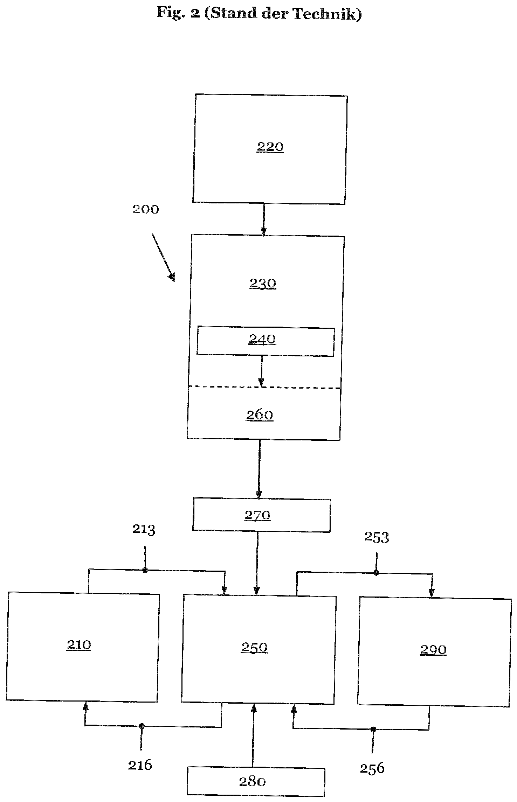

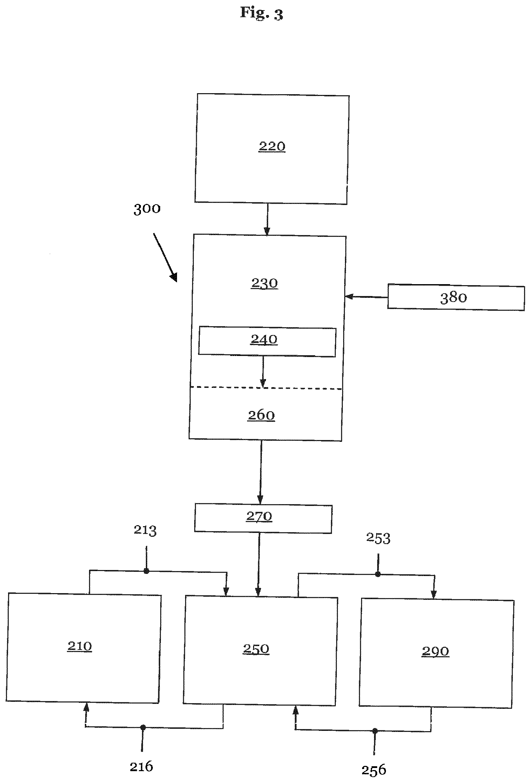

In der vorliegenden Anmeldung wird ein Verfahren der Offline-Programmierung eingesetzt, das als CAD (Computer-Aided Design) gestützte Programmierung bekannt ist. Wie im Folgenden anhand der Diskussion der Figuren 2 und 3 im Detail ausgeführt werden wird, wird bei dieser Art der Programmierung ein Steuerprogramm 170 für den IR 150 auf der Basis von Konstruktionszeichnungen des Werkstücks 190 und Simulationen erzeugt. Bei einer Offline-Programmierung entfallen die Stillstandzeiten der Lernphase, d.h. während des "Teachen".

Das Steuerprogramm 170 ist in Industrierobotern 150, die als Werkzeugmaschine arbeiten, derzeit häufig in Form einer numerischen Steuerung oder einer NC (Numeric Control) bzw. einer computergestützten numerischen Steuerung oder einer CNC (Computerized Numeric Control) gemäß der DIN 66025 ausgeführt. Im Folgenden wird auf die Unterscheidung zwischen NC und CNC verzichtet. Details der CAD gestützten Programmierung werden nachfolgend während der Diskussion der Figuren 2 und 3 erläutert.

Die derzeit auf dem Markt befindlichen Steuerungen von Industrierobotern lassen sich in drei Gruppen einteilen: 1. Steuerungen, die ausschließlich die Syntax der DIN 66025 zur Programmierung einsetzen. 2. Steuerungen, die neben der Syntax der DIN 66025 auch in der Regel Hersteller-abhängige Sonderbefehle bzw. Hochsprachenelemente nutzen. 3. Steuerungen, die nur mittels einer Hersteller-abhängigen Befehlssyntax programmiert werden. Alle drei Gruppen von Steuerungen können das in dieser Anmeldung beschriebene Verfahren nutzen.

Das Werkzeug 164 ist auf das zu bearbeitende Werkstück 190 gerichtet, das auf einem ortsfesten Werktisch 175 angeordnet ist. In einem alternativen Ausführungsbeispiel kann der Werktisch 175 durch Antriebe in einer oder zwei Raumrichtungen senkrecht zum Werkzeug 164 beweglich ausgeführt sein. Zum Fixieren des Werkstücks 190 auf dem Werktisch 175 können alle bekannten Spannvorrichtungen einsetzt werden. Das definierte Verfahren weist keinerlei Einschränkungen hinsichtlich des zu bearbeitenden Werkstücks 190 auf. Vielmehr lässt sich das hier beschriebene Verfahren auf alle Arten von Werkstücken 190 anwenden.

Der Prozessor 168 des IR 150 steht über die Verbindung 171 mit dem Überwachungssystem 110 in Kommunikation. Zusätzlich kann der IR 150 optional an eine Speicher-programmierbaren Steuerung (SPS) 180 angeschlossen sein. Diese ist in der Fig. 1 punktiert dargestellt. Im englischen Sprachraum wird die SPS Programmable Logic Controller (PLC) genannt. Die SPS 180 kontrolliert häufig das Zusammenwirken des IR 150 mit der umgebenden Anlagentechnik (in der Fig. 1 nicht gezeigt).

An einem Bedienfeld oder Bedienterminal 185 kann der Prozessor 168 über eine Verbindung 189 vorgegebene Einstellungen des Steuerprogramms 170 anzeigen und Daten, die er von den verschiedenen Komponenten 152, 155, 160 des IR 150 erhalten hat, darstellen. Ein Maschinenführer startet und stoppt über eine an dem Bedienfeld 185 angebrachte Tastatur oder einen Touchscreen (in der Fig. 1 nicht dargestellt) den IR 150. Über die Tastatur des Bedienfeldes 185 kann der Maschinenführer oder ein Arbeitsvorbereiter ferner Änderungen an einem in dem Prozessor 168 des IR 150 ablaufenden Steuerprogramm 170 vornehmen und so den Ablauf eines Bearbeitungsprozesses und dessen Überwachung beeinflussen.

In dem veranschaulichenden Beispiel der Fig. 1 weist das Überwachungssystem 110 neben den IR internen Sensoren drei Sensoren auf, die Daten messen, mit deren Hilfe ein Bearbeitungsprozess, der auf dem Industrieroboter 150 ausgeführt wird, überwacht werden kann.

Der Sensor 120 überwacht das Drehmoment der Spindel 161 und sendet die Messdaten über die Verbindung 125 an das Überwachungssystem 110. Wie im einleitenden Teil angedeutet, kann der Sensor 120 auf der Basis von Piezoquarzen ausgeführt werden, die auf dem Werkzeug 164 angebracht sind.

Der Sensor 130 misst den Vorschub des Effektors 160 oder im Beispiel der Fig. 1 der Spindel 161. Der Manipulator 155 des IR 150 führt den Vorschub des Effektors 160 bzw. der Spindel 161 senkrecht zum Werkstück 190 aus. Ferner detektiert ein im Werktisch 175 angeordneter dritter Sensor 140 den Körperschall, der von dem Bearbeitungsprozess (einem Fräsprozess in dem Beispiel der Fig. 1) erzeugt wird.

Die Sensoren 120, 130 und 140 sowie die Sensoren des Fußes 152, des Manipulators 155 und des Effektors 160 des IR 150 übermitteln ihre Messdaten über die Verbindungen 125, 35,145 und 171 an das Überwachungssystem 110. Die Verbindungen 125, 35 und 145 zwischen den Sensoren 120, 130 und 140 und dem Überwachungssystem 110 ebenso wie die Verbindung 171 zwischen dem Überwachungssystem 110 und dem Prozessor 168 können drahtgebunden oder drahtlos ausgeführt werden. Falls möglich ist eine drahtlose Datenübertragung zwischen dem Sensor 120, 130, 140 sowie den Sensoren des IR 150 und dem Überwachungssystem 110 bevorzugt. Bei dieser Ausführung schränken keine Drähte die Bewegungen der verschiedenen Komponenten 152, 155 und 160 des IR 150 ein und zum anderen können Verbindungsdrähte 125, 135 145 und 171 durch die Bewegungen der Komponenten 152, 155 und 160 des IR 150 nicht beschädigt oder zerstört werden.

Im einfachsten Fall gibt das Überwachungssystem 110 die Messdaten der Sensoren 120, 130, 140 und der Sensoren der Komponenten 152, 155 und 160 des IR 150 über die Verbindung 171 an den Prozessor 168 des IR 150 weiter. Das im Prozessor 168 ablaufende Steuerprogramm 170 kann dann veranlassen, dass alle Daten oder ein Teil der Daten dem Maschinenführer des Industrieroboters 150 an dem Bedienfeld 185 angezeigt werden.

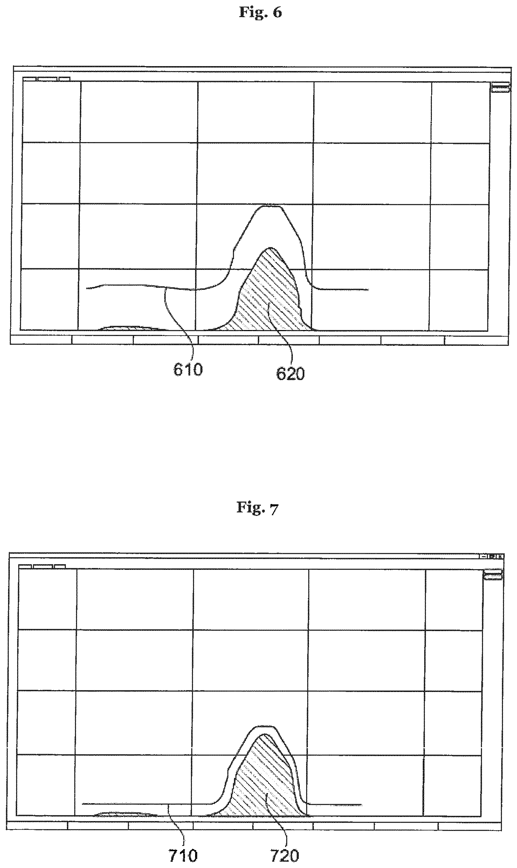

In der Regel bearbeitet das Überwachungssystem 110 jedoch die von den Sensoren 120, 130, 140 und den Sensoren des IR 150 gelieferten Messdaten. Dies kann in einfachen Fällen beispielsweise ein Filtern und/oder ein Verstärken der Messdaten sein. Es ist jedoch andererseits häufig notwendig, aus den Messdaten der Sensoren 120, 130, 140 und der Sensoren der Komponenten 152, 155 und 160 des IR 150 andere Größen abzuleiten, die besser für die Überwachung eines spezifischen Bearbeitungsprozesses geeignet sind. Das Überwachungssystem 110 gibt dann die abgeleiteten Größen über den Prozessor 168 des IR 150 am Bedienfeld 185 zur Anzeige aus. Häufig werden die den Bearbeitungsprozess charakterisierenden Größen zusammen mit zulässigen Grenzwerten angezeigt (siehe Figuren 6 bis 9).

Überschreitet eine zur Überwachung eines Bearbeitungsprozesses eingesetzte aus den Messdaten der Sensoren 120, 130, 140 sowie der Sensoren des IR 150 abgeleitete Größe einen Grenzwert, löst das Überwachungssystem 110 einen Alarm aus. Ein Alarm kann einen sofortigen Stopp des IR 150 bewirken, d.h. im Beispiel der Fig. 1 werden die Rotation der Spindel 161 und die Bewegung des Werkzeugs 164 relativ zum Werkstück 190 unmittelbar angehalten oder nur die Vorschubbewegung des Manipulators 155 des IR 150 bezüglich des Werkstücks 190 wird angehalten. Ferner kann ein Alarm das Anhalten des IR 150 am Ende des Bearbeitungsschritts bewirken oder beispielsweise nur das Anzeigen einer Mitteilung für den Maschinenführer des IR 150 am Bedienfeld 185 bewirken.

Anders als in dem in der Fig. 1 dargestellten Beispiel ist es auch möglich, dass das Überwachungssystem 110 ein eigenes Display oder einen eigenen Monitor aufweist, auf dem die aufbereiteten Daten eines oder mehrerer Sensoren 120, 130, 140 sowie eines oder mehrerer der IR internen Sensoren in Kombination mit entsprechenden Grenzwerten dargestellt werden.

Anhand der schematischen Darstellung der Fig. 2 wird im Folgenden der Herstellungsprozess eines Steuerprogramms für die Kombination eines Industrieroboters 150 und eines Überwachungssystems 110 der Fig. 1 nach dem Stand der Technik erläutert. In der Fig. 2 weist das Überwachungssystem das Bezugszeichen 210 auf und der IR bzw. der Bearbeitungsprozess werden durch die Bezugszeichen 250 bzw. 290 gekennzeichnet.

Wie bereits während der Diskussion der Fig. 1 ausgeführt, gibt der IR 150, 250 im Beispiel der Fig. 1 über die Spindel 161 und die Vorschubbewegung(en) ein Drehmoment und Vorschubkräfte 253 an den Bearbeitungsprozess 290. Der Bearbeitungsprozess 290 wiederum liefert Prozesskräfte, wie beispielsweise ein oder mehrere Drehmomente, ein oder mehrere Orts- und/oder Winkelkoordinaten und/oder Schwingungen, symbolisiert durch die Verbindung 256, an die Sensoren 120, 130, 140 sowie an die in der Spindel 161 und den an dem Fuß 152, dem Manipulator 155 und dem Effektor 160 vorhandenen Sensoren (in den Figuren 1 und 2 nicht eingezeichnet). Der IR 150, 250 gibt die Signale der Sensoren 120, 130, 140 und der IR internen Sensoren in Fig. 2 über die Verbindung 216 an das Überwachungssystem 210. Letzteres teilt über die Verbindung 213 dem IR 250 Fehlerzustände mit.

Der in der Fig. 2 dargestellte Prozess beginnt mit dem Erzeugen eines dreidimensionalen Modells eines zu fertigenden Werkstücks 190 mit Hilfe eines Computer-Aided Design (CAD)-Systems 220.

Die Daten des dreidimensionalen Modells des zu fertigenden Werkstücks 190 werden dann meist in einem standardisierten Format, wie beispielsweise Step oder IGES in ein Computer-Aided Manufacturing (CAM)-System 230 eingelesen. In dem CAM-System 220 erfolgt dann die Planung des Bearbeitungsprozesses 290, den der Ihr 150, 250 später ausführen soll, durch die Auswahl und die Zuordnung der für den Bearbeitungsprozess 290 benötigten Werkzeuge 164. Als Planungsgrundlage dienen dabei die von dem CAD-System 220 übernommenen CAD-Daten des zu fertigenden Werkstücks 190.

Das CAM-System 230 generiert zu jedem Werkzeug 164 eine entsprechende Bahn von der Werkzeugablage, dem Transport des Werkzeugs 164 zum Einsatzort an dem Werkstück 190, dem eigentlichen Bearbeitungsschritt sowie dem Rücktransports des Werkzeugs 164 zur Werkzeugablage. Neben der Bahn berechnet das CAM-System 230 ferner die Geschwindigkeiten mit denen die verschiedenen Abschnitte der Bahnbewegung durchlaufen werden. Für den eigentlichen Bearbeitungsprozessschritt an dem Werkstück 190 bestimmt das CAM-System 230 zudem die Drehzahl des Werkzeugs 164 sowie die Vorschubrate(n) des Manipulators 155 des IR 150. Die Beschreibung der Bahnbewegungen aller Werkzeuge 164 einschließlich der jeweiligen Geschwindigkeiten bildet das CAM-Programm 240 für das zu fertigende Werkstück 190.

Im Anschluss an die Generierung des CAM-Programms 240 wird der Bearbeitungsprozess 290 des zu fertigenden Werkstücks 190 in dem CAM-System 230 simuliert.

Nach erfolgreichem Verlauf der Simulation in dem CAM-System 230 erzeugt ein Postprozessor 260 des CAM-Systems 230 aus dem CAM-Programm 240 automatisch das Steuerprogramm 270 das von dem Prozessor 168 des IR 150, 250 ausgeführt werden soll. Wie bereits erwähnt, kann der Prozessor 168 des IR 150, 250 Computerized Numerical Control (CNC)-Programme oder einfach Numerical Control (NC)-Programme oder NC-Code gemäß DIN 66025 ausführen. Softwarespezifische Zwischenstufen des Steuerprogramms 270, die mit Hilfe eines Parsers in eine Roboter-spezifische Sprache umgesetzt werden müssen, entfallen.

Bei Bedarf kann das Steuerprogramm 270 in dem CAM-System 230 gespeichert werden. Vor Beginn des Bearbeitungsprozesses 290 für das Werkstück 190 wird das Steuerprogramm 270 von dem CAM-System 230 in den Speicher 165 des IR 150, 250 übertragen. Der für den IR 150, 250 zuständige Maschinenführer oder ein Arbeitsvorbereiter fügen in das Steuerprogramm 270 des IR 150, 250 manuell eine oder mehrere Anweisungen 280 oder Befehlszeilen ein, die beim Ablauf des Steuerprogramms 270 die Überwachungseinrichtung oder das Überwachungssystem 110, 210 starten. Auch eine optionale Anbindung einer SPS 180 erfolgt derzeit typischerweise vor Ort.

Damit das Überwachungssystem 110, 210 die Überwachungsfunktion vernünftig bereitstellen kann, ist es jedoch notwendig, das Überwachungssystem 110, 210 auf den speziellen von dem Steuerprogramm 270 ausgeführten Bearbeitungsprozess 290 einzustellen oder zu parametrisieren. Dazu müssen an einer oder meistens mehreren Stellen innerhalb des Steuerprogramms 270 entsprechenden Anweisungen oder Befehlszeilen 280, die im Folgenden Überwachungsanweisungen genannt werden, in das Steuerprogramm 270 eingefügt werden.

In der lauten hektischen Umgebung einer Fertigungshalle, in der das Bedienpersonal mitunter unter erheblichem Zeitdruck steht, ist dies jedoch häufig ein schwieriges Unterfangen. Aber auch ohne zeitlichen Druck und unter Ausblendung der Umgebung ist es für das Bedienpersonal des IR 150, 250 vor Ort häufig schwierig, den gesamten Bearbeitungsprozess 290 des zu fertigenden Werkstücks 190 in voraus vollständig zu überblicken.

Zudem ist es für eine zuverlässige Funktion des Überwachungssystems 110, 210 unerlässlich festzulegen, welche Sensorsignale in den Überwachungsvorgang einzubeziehen sind. Für jedes Signal ist ein Schwankungsintervall festzulegen, bei dessen Überschreiten ein entsprechender Alarm ausgelöst wird. Bei der Wahl eines zu kleinen Intervalls besteht das Risiko, dass Fehlalarme ausgelöst werden. Bei der Wahl eines zu großen zulässigen Schwankungsbereichs besteht die Gefahr, dass das Überwachungssystem 110, 210 auftretende Fehler nicht detektiert. Dies führt häufig dazu, dass das Bedienpersonal am IR 150, 250 sich mit der Einstellung des Überwachungssystems 110, 210 überfordert fühlt. Im Ergebnis unterbleibt deshalb häufig das Einstellen oder Konfigurieren des Überwachungssystems 110, 210 für einen spezifischen Bearbeitungsprozess 290; oder die Parametrisierung erfolgt zumindest nicht optimal. Dies passiert insbesondere bei sehr langen Steuerprogrammen 270.

In der Fig. 3 ist schematisch dargestellt, wie die vorliegende Erfindung die Nachteile des gegenwärtigen Einstellens einer Überwachungsfunktion oder eines Überwachungssystems 110, 210 beseitigt. Die Anordnung 300 der Fig. 3 reproduziert die Anordnung 200 der Fig. 2 mit dem einzigen Unterschied, dass das Eingeben der Anweisungen 380 zum Einstellen des Überwachungssystems 110, 210 nicht am IR 150, 250 selber erfolgt, sondern an dem CAM-System 230.

Damit wird das Implementieren der Anweisung(en) 280 zum Überwachen des IR 150, 250 von der Fertigungsumgebung der Fig. 1 in die Büroumgebung des CAM-Systems 230 verlagert. Während der Diskussion der Fig. 2 wurde ausgeführt, dass zur Generierung des CAM-Programms 240 die Bewegungen und Geschwindigkeiten aller Werkzeuge 164 bestimmt werden müssen. In dem Kontext der umfassenden Analyse des Bearbeitungsprozesses 290 ist es günstig, die Überwachung des Bearbeitungsprozesses 290 mit zu untersuchen.

Die vorliegende Erfindung sieht deshalb vor, die Anweisungen 380 zum Einstellen des Überwachungssystems 110, 210 nicht in das Steuerprogramm 270 einzufügen, sondern in das vorgelagerte CAM-Programm 240. Der Postprozessor 260 erzeugt, dann automatisch aus dem CAM-Programm 240 ein Steuerprogramm 270 für den IR 150, 250, das bereits alle Anweisungen einer optimal auf den jeweiligen Bearbeitungsprozess 290 angepassten Überwachungsfunktion enthält. Eine Eingabe von Anweisungen 280 für das Überwachungssystem 110, 210 am IR 150, 250 entfällt.

Die meisten derzeit im Einsatz befindlichen CAM-Systeme 230 ermöglichen es über die reinen Bahnbewegungen hinaus, zusätzliche Anweisungen oder Befehle in das NC-Programm oder das Steuerprogramm 270 des IR 150, 250 einzufügen. Die Anweisungs- oder Befehlszeilen können manuell in das CAM-Programm 240 eingetragen werden oder mit Hilfe eines oder mehrerer Skripten erzeugt und in das NC-Programm oder das Steuerprogramm 270 eingefügt werden.

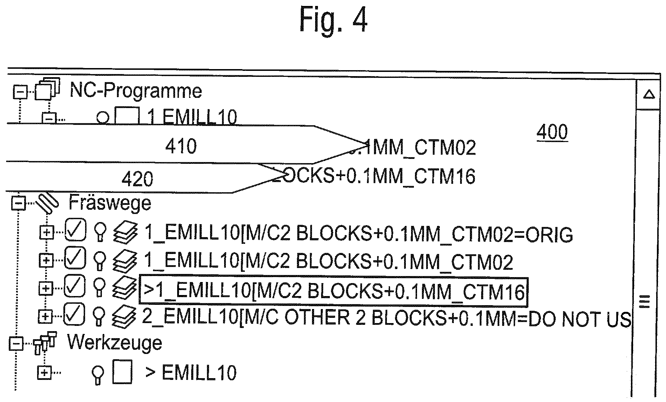

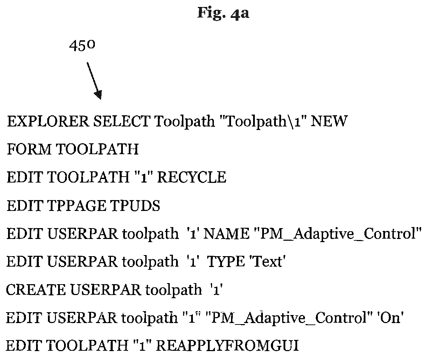

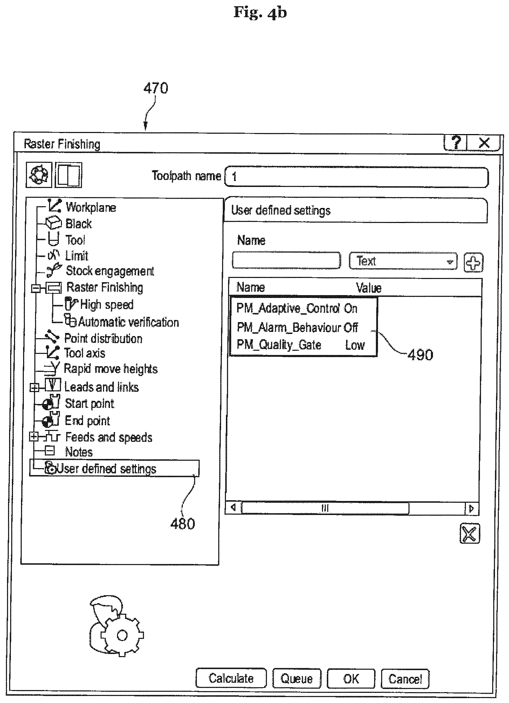

Die Fig. 4 veranschaulicht an einem kurzen Ausschnitt eines CAM-Programms 400 wie Anweisungen zum Überwachen eines Bearbeitungsprozesses 290 durch das Überwachungssystem 110, 210 in ein CAM-Programm eingefügt werden können. Die Erweiterungen oder Extensions 410, 420, die in der Fig. 4 die Kennungen 02 und 16 angeben, sind Kennungen verschiedener in das CAM-Programm 240, 400 eingefügter Anweisungen zum Einstellen des Überwachungssystems 110, 210. Im Detail werden die Extensions 410, 420 Werkzeugpfaden des CAM-Programms 240, 400 hinzugefügt.

Neben den in der Fig. 4 dargestellten Extensions 410 und 420 des CAM-Programms 240, 400 können die Anweisungen zum Konfigurieren des Überwachungssystems 110, 210 auch in Form von eigenen Programmzeilen beispielsweise in der Form Nutzer-definierter Eigenschaften oder User Defined Properties den entsprechen Werkzeugpfaden dem CAM-Programm 240, 400 hinzugefügt werden (in der Fig. 4 nicht dargestellt).

Die Fig. 4a gibt ein Makroskript 450 wieder, das darstellt, wie einem Werkzugpfad automatisch von extern eine neue Überwachungseigenschaft zugeordnet wird. Das in dem Beispiel der Fig. 4a dargestellte Makroskript 450 erstellt die Nutzer-definierte Eigenschaft ,PM_Adaptive _Control' und weist dieser den Wert,On' zu.

Die Fig. 4b veranschaulicht wie Nutzer-definierte Eigenschaften oder in englischer Sprache User Defined Settings in eine Dialog-Oberfläche 470 eines CAM-Programms 400 aufgenommen werden können. In dem Beispiel der Fig. 4b enthält das CAM-Programm 400 ein Untermenu 480 User Defined Settings. In dem Untermenu 480, dessen Inhalt 490 auf der rechten Seite der Dialog-Oberfläche 470 dargestellt ist, sind die Nutzer-definierten Eigenschaften ,PM_Adaptive_Control', ,PM_Alarm_Behaviour' und ,PM_Quality_Gate' aufgelistet, wobei in dem wiedergegebenen Beispiel die erstgenannte Eigenschaft eingeschaltet ist und die zweite Eigenschaft ausgeschaltet ist. Die zuletzt genannte Nutzer-definierte Eigenschaft weist den Wert 'Low' auf.

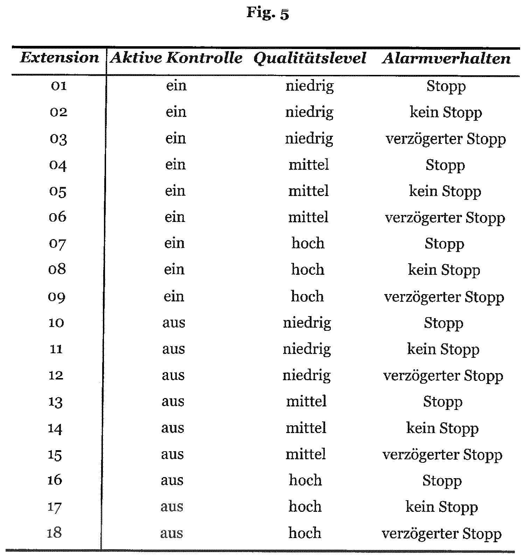

Die Fig. 5 zeigt eine Tabelle, in der neben den beiden in der Fig. 4 angegebenen Extensions 410 (mit der Kennung 02) und 420 (mit der Kennung 16) sechzehn weitere Extensions 410, 420 auflistet sind, die verschiedene weitere Beispiele von Konfigurationseinstellungen für das Überwachungssystem 110, 210 beschreiben. Die insgesamt 18 Extensions 410, 420 oder Kennungen, die in der beispielhaften Tabelle der Fig. 5 aufgeführt sind, umfassen drei verschiedene Merkmale oder Klassen von Features des Überwachungssystems 110, 210. Das Merkmal 'Alarmverhalten' in der rechten Spalte der Tabelle der Fig. 5 weist drei verschiedene Werte oder Reaktionen auf einen von dem Überwachungssystem 110, 210 festgestellten Alarm auf. Bei einer Anweisung zum sofortigen Stopp des IR 150, 250 veranlasst das Überwachungssystem 110, 210 den Prozessor 168 des IR 150, 250 zu einem sofortigen Stopp der Rotation der Spindel 161 sowie Vorschubbewegungen des Manipulators 155 des IR 150. In weiteren Unterscheidungen der Anweisung Stopp, die in der Tabelle der Fig. 5 nicht dargestellt sind, kann beispielsweise nur die Vorschubbewegungen des Manipulators 155 angehalten werden, während die Spindel 161 die Rotation des Werkzeugs 164 fortsetzt. Die Ausprägungen des Alarmverhaltens Stopp können - ebenfalls in der Tabelle der Fig. 5 nicht angegeben - ferner von dem eingesetzten Werkzeug, dem Bearbeitungsprozess und/oder dem Fortschritt innerhalb eines Bearbeitungsschrittes des Bearbeitungsprozess 290 abhängen.

Das Alarmverhalten, kein Stopp' bedeutet, es wird keine Alarmreaktion ausgelöst. Derzeit wird dieses Verhalten hauptsächlich als Vorwarnung oder zu reinen Demonstrationszwecken benutzt. In einem zukünftigen Ausführungsbeispiel könnte das Alarmverhalten kein Stopp jedoch beispielsweise das Anzeigen einer Anzeige an dem Bedienfeld 185 des IR 150 bewirken, dass das eingesetzte Werkzeug 164 das Ende seiner Lebensdauer erreicht und deshalb nach maximal N-weiteren Einsätzen ausgetauscht werden sollte. Ferner könnte das Detektieren des Alarmverhaltens kein Stopp beispielsweise anzeigen, dass eine Temperatur gegen eine vorgegebene obere Grenze strebt und/oder die Zufuhr von Kühl- und/oder Schmiermittel sich einer kritischen unteren Grenze nähert.

Schließlich bewirkt das Auftreten eines verzögerten Stopps ein Anhalten des IR 150, 250 durch das Überwachungssystem 110, 210 zum Ende des gerade laufenden Bearbeitungsschrittes oder eines Bearbeitungsteilschrittes des Bearbeitungsprozesses 290.

Die in der Tabelle der Fig. 5 wiedergegebenen Alarme ,verzögerter Stopp' und ,kein Stopp', können unterschiedliche Ausprägungen aufweisen, die beispielsweise von dem verwendeten Werkzeug 164, der Art des Bearbeitungsschrittes, dem Fortschritt innerhalb eines Bearbeitungsschrittes und dem zu bearbeitenden Werkstück 190 abhängen. Die in der Fig. 5 angegebene Tabelle kann deshalb nur einen kleinen Ausschnitt aus einer ganzen Bibliothek oder Datenbank von Kennungen oder Extensions 410, 420 für Anweisungen zum Konfigurieren des Überwachungssystems 110, 210 für einen bestimmten Bearbeitungsprozess 290 angeben.

Das in dem Beispiel der Fig. 5 in der dritten Spalte der Tabelle wiedergegebene Merkmal 'Qualitätslevel' umfasst ebenfalls drei verschiedene Qualitätsstufen für einen Bearbeitungsschritt eines Bearbeitungsprozesses 290. Die Fig. 6 zeigt schematisch einen Bearbeitungsschritt, der mit der Einstellung eines niedrigen Qualitätslevels durchgeführt wird. Der Bearbeitungsschritt wird mit einer oberen Hüllkurve 610 überwacht. Die zur Überwachung des Bearbeitungsschritts eingesetzte Größe 620, wie etwa ein an der Spindel 161 mit Hilfe des Sensors 120 gemessenes Drehmoment weist an jeder Stelle einen großen Abstand zu der Hüllkurve 610 auf. Damit würde auch eine größere Variation der Höhe des Drehmoments während des in der Fig. 6 dargestellten Bearbeitungsschritts nicht zum Auslösen eines Alarms führen. Der in der Fig. 6 dargestellte Verlauf des Drehmoments der Spindel 161 ist lediglich ein Beispiel einer überwachten Größe. Die von den IR internen Sensoren und den Sensoren 130 und 140 ermittelten Größen können bei Bedarf ebenfalls oder alternativ zum in der Fig. 6 dargestellten Drehmoment überwacht werden.

Die Fig. 7 veranschaulicht einen Bearbeitungsschritt, bei dem ein hoher Qualitätslevel in dem Überwachungssystem 110, 210 eingestellt ist. Die obere Hüllkurve 710 weist nur noch einen geringen Abstand von der zur Überwachung des Bearbeitungsschritts eingesetzten Größe 720 auf. Da der in der Fig. 7 wiedergegebene Bearbeitungsschritt den erwarteten Verlauf nimmt, führt das Konfigurieren des Überwachungssystems 110, 210 mit einem hohen Qualitätslevel nicht zu einer Alarmsituation.

Darüber hinaus weist das Merkmal 'Qualitätslevel' der Tabelle der Fig. 5 eine mittlere Qualitätsstufe auf, die zwischen den in den Figuren 6 und 7 gezeigten Qualitätspegeln liegt.

Die Einteilung des Merkmals 'Qualitätslevel' in drei Stufen ist lediglich beispielhalft. Es ist natürlich möglich, eine andere Einteilung in mehr oder weniger Stufen vorzunehmen. Zudem ist es, wie oben am Beispiel des Alarmverhaltens erläutert, möglich, die Einteilungen des Merkmals 'Qualitätslevel' von dem durchzuführenden Bearbeitungsschritt, der Bearbeitungsart und/oder dem zu bearbeitenden Werkstück 190 abhängig zu machen, um nur einige Beispiele zu nennen.

Das in der zweiten Spalte der Tabelle der Fig. 5 gezeigte Merkmal 'aktive Kontrolle' kann eingeschaltet oder ausgeschaltet werden. Der Zustand eingeschalteter aktiver Kontrolle wird im Folgenden auch aktiver, adaptiver Überwachungsmodus genannt und der Zustand ausgeschalteter aktiver Kontrolle wird im Folgenden auch als passiver Überwachungsmodus bezeichnet.

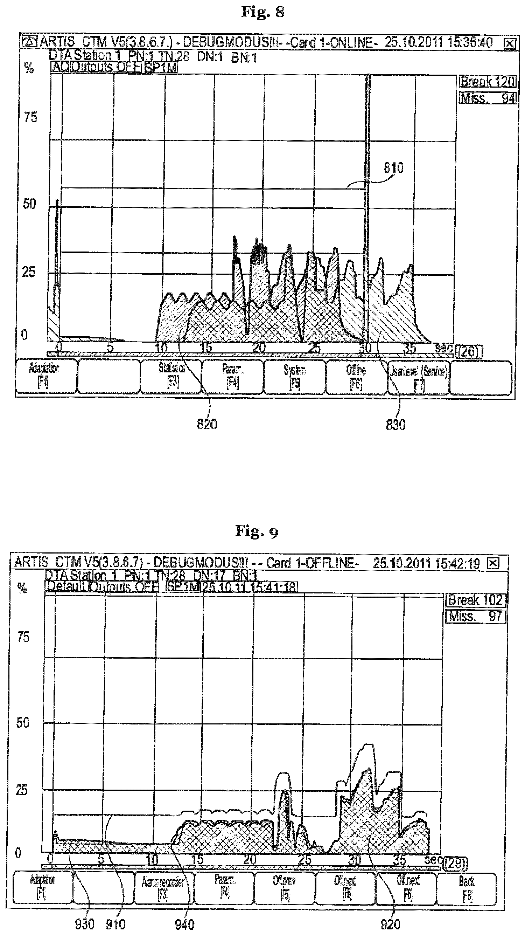

Die Fig. 8 zeigt ein Beispiel eines Bearbeitungsschritts eines Bearbeitungsprozesses 290 für ein zu fertigendes Werkstück 190, der mit eingeschalteter aktiver Kontrolle durchgeführt wurde. Der Bearbeitungsschritt wird ausschließlich durch einen sehr hoch gewählten, festen oberen Grenzwert 810 überwacht. Die Kurvenverläufe 820 und 830 repräsentieren zwei verschiedene Beispiele der zur Überwachung verwendeten Größe, die während der Ausführung eines Bearbeitungsschrittes aufgenommen wurden. Wie aus den unterschiedlichen Anfangs- und Endzeitpunkten der Kurvenverläufe 820 und 830 zu ersehen ist, unterliegt der im aktiven adaptiven Überwachungsmodus durchgeführte Bearbeitungsschritt einer verkürzten Taktzeit.

In der Fig. 9 sind ähnlich wie in der Fig. 8 drei Bearbeitungsschritte eines Bearbeitungsprozesses 290 dargestellt, bei denen die 'aktive Kontrolle' ausgeschaltet ist, d.h. der passive Überwachungsmodus eingeschaltet ist. Darüber hinaus wird der Bearbeitungsschritt nicht wie in der Fig. 8 durch eine zeitlich invariante obere Grenze 810 überwacht, sondern durch eine obere Hüllkurve 910 mit einem hohen Qualitätslevel. Die drei in der Fig. 9 dargestellten Bearbeitungsschritte 920, 930 und 940 weisen nur noch eine minimale zeitliche Schwankung auf. Ferner variiert die Höhe der zur Überwachung herangezogenen Größe zwischen den drei Kurvenverläufen 920, 930 und 940 der Wiederholungen des Bearbeitungsschrittes nur wenig.

Der in der Fig. 8 dargestellte aktive adaptive Überwachungsmodus und der in der Fig. 9 veranschaulichte passive Überwachungsmodus haben entgegengesetzte Zielsetzungen. Der aktive adaptive Überwachungsmodus hat primär das Ziel die Zykluszeit des Bearbeitungsschritts zu minimieren. Dafür werden größere Schwankungen im zeitlichen Ablauf der zur Überwachung eingesetzten Größe in Kauf genommen. Der passive Überwachungsmodus hat hingegen die Zielsetzung, die Variation zwischen den einzelnen Ausführungen des überwachten Bearbeitungsschritts möglichst klein zu halten. Die Zykluszeit des in der Fig. 8 dargestellten Bearbeitungsschritts ist etwa 20 % geringer verglichen mit der Ausführung des in der Fig. 9 gezeigten passiven Überwachungsmodus.

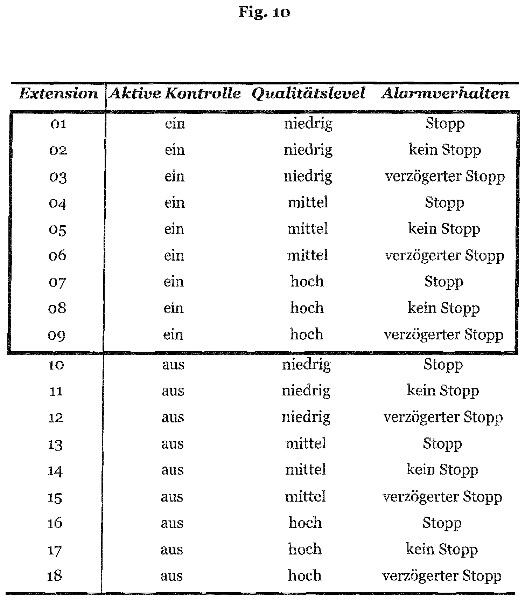

Es gibt Anwendungsbereiche, in denen der aktive, adaptive Überwachungsmodus für zu fertigende Werkstücke 190 nicht eingesetzt werden darf. Ein Beispiel dafür ist die Luftfahrtindustrie. Hier darf ein einmal zertifizierter Prozess nicht mehr verändert werden. Die Fig. 10 veranschaulicht wie sich dadurch die Anzahl der zulässigen Kennungen oder Extensions 410, 420 der in der Fig. 5 dargestellten Tabelle halbiert. Die schwarz umrandeten Kennungen oder Extensions 410, 420 mit den Kennungen 01 bis 09, die den aktiven adaptiven Überwachungsmodus repräsentieren, sind in diesem Fall nicht erlaubt.

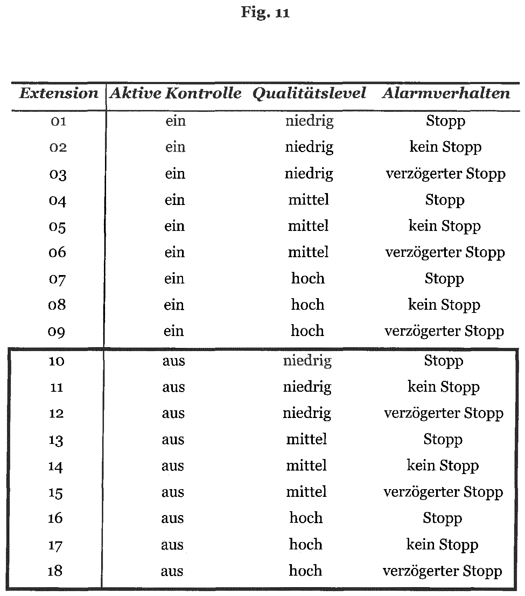

Andererseits existieren Einsatzfelder oder Technologiebereiche, die unter enormem wirtschaftlichen Druck stehen. In denen eine möglichst geringe Zykluszeit jedes einzelnen Bearbeitungsschritts des Bearbeitungsprozesses 290 oberste Priorität hat. Ein Beispiel hierfür ist die Automobilindustrie. In diesem Fall ist es notwendig mit eingeschaltetem aktiven, adaptiven Überwachungsmodus zu arbeiten. Die Fig. 11 symbolisiert den Teil der Tabelle der Fig. 5 - der außerhalb des schwarz umrandeten Bereichs liegt - aus dem dann noch die Extensions 410, 420 zum Einstellungen des Überwachungssystems 110, 210 ausgewählt werden können.

In der in der Fig. 5 repräsentierten Tabelle ist das Merkmal 'aktive Kontrolle' digital, d.h. es weist nur zwei Werte oder Zustände auf. Es ist jedoch auch möglich, dass jeder Einsatzbereich oder Anwendungsbereich des gefertigten Werkstücks 190 eine eigene Kennzeichnung des Merkmals 'aktive Kontrolle' erfordert. Die Zahl der Zeilen in der Tabelle der Fig. 5 würde sich entsprechend vervielfachen (in der Fig. 5 nicht gezeigt).

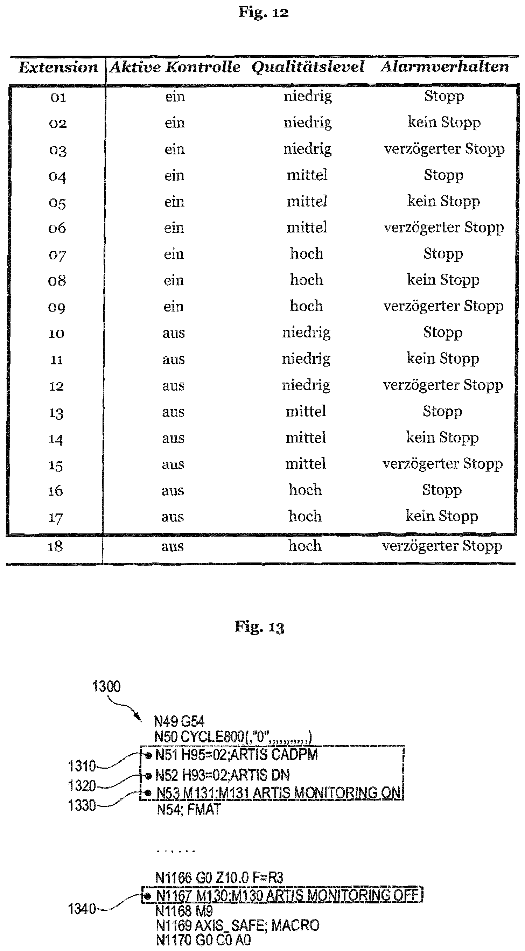

Neben den Anwendungsbereichen der gefertigten Werkstücke 190 beeinflusst die Art des Bearbeitungsprozesses 290 die Konfiguration des Überwachungssystems 110, 210. Bei einem Gewindeschneideprozess darf beispielsweise im Falle des Auftretens eines Fehlers, der einen Alarm zum sofortigen Stopp des IR 150, 250 auslöst, die Rotation der Spindel 161 und ihr Vorschub durch den Manipulator 155 des IR 150 nicht sofort angehalten werden. Beim erneuten Starten der Drehung der Spindel 161 und ihres Vorschubs zum Entfernen des Gewindeschneiders aus dem Werkstück 190 würde der Gewindeschneider brechen. Die Fig. 12 zeigt, dass dadurch ein Gewindeschneideprozess mit nur einer Extensimon 410,420 außerhalb des schwarz umrandeten Teils der Tabelle der Fig. 12, bzw. ausschließlich mit der Kennung 18 der Tabelle der Fig. 5 ausgeführt werden kann.

Die Tabelle der Fig. 5 weist drei Merkmale auf, wobei zwei dieser Merkmale jeweils drei verschiedene Werte annehmen können. Ein Merkmal (,aktive Kontrolle') weist zwei Werte auf. Insgesamt umfasst damit die Tabelle der Fig. 5 achtzehn (2x3x3) verschiedene Kombinationen der drei Merkmale. Neben den drei in der Tabelle der Fig. 5 aufgelisteten Merkmalen kann es jedoch notwendig oder wünschenswert sein, weitere Größen zum Einstellen des Überwachungssystems 110, 210 zu benutzen. Wie bereits kurz mit Bezug auf die Fig. 12 angesprochen, hat die Bearbeitungsart einen erheblichen Einfluss auf die Konfiguration oder Parametrisierung des Überwachungssystems 110, 210. Die Bearbeitungsart kann deshalb als ein eigenes Merkmal in die Tabelle der Fig. 5 aufgenommen werden (in der Fig. 5 nicht gezeigt).

Wie in dem Beispiel der Fig. 12 oben ausgeführt, kann der Werkzeugtyp ebenfalls Auswirkungen auf die Konfiguration des Überwachungssystems 110, 210 haben. Zudem kann eine variierende Größe des Werkzeugs 164 es erforderlich machen, die Überwachung eines Bearbeitungsschritts entsprechend anzupassen. Beispielsweise kann eine taktile Analyse eines großen Werkzeugs zum Bestimmen eines vorhandenen Werkzeugs 164 geeignet sein, während bei der Anwendung dieser Untersuchungsmethode auf ein kleines Werkzeug 164 die Gefahr einer Beschädigung oder gar einer Zerstörung des Werkzeugs 164 besteht. Bei berührungslosen Analyseverfahren besteht diese Gefahr hingegen nicht. Somit kann es sinnvoll sein, den Werkzeugtyp und die Werkzeuggröße als weitere eigenständige Merkmale in der Tabelle der Fig. 5 aufzunehmen, die die verschiedenen Einstelloptionen des Überwachungssystems 110, 210 in Form von Extensions 410, 420 für ein CAM-Programm 240, 400 zusammenfasst.

Überdies kann der Fortschritt innerhalb eines Bearbeitungsschritts in dem Bearbeitungsprozess 290 Änderungen an den Einstellungen des Überwachungssystems 110, 210 erforderlich machen. Zum Beispiel kann ein erster grober Teilabtrag in einem Fräsprozessschritt ohne Überwachung oder nur mit einer Überwachung mittels eines festen oberen Grenzwerts durchgeführt werden (siehe Fig. 8). Der anschließende Teilschritt zum Herstellen der vordefinierten Oberflächenkontur des Werkstücks 190 erfordert andererseits eine Überwachung, die bereits eine geringe Abweichung von einem vorbestimmten Prozessverlauf detektiert.

Im Ergebnis stellt somit die Tabelle der Fig. 5 nur einen kleinen beispielhaften Ausschnitt aus einer ganzen Bibliothek von Einstellungsoptionen für das Überwachungssystem 110, 210 dar.

In einem möglichen Ablauf der Generierung eines Steuerprogramms 270 für den IR 150, 250 und das angeschlossene Überwachungssystem 110, 210 analysiert ein Skript oder ein Analyse-Skript, das beispielsweise von dem Prozessor des CAM-Systems 230 ausgeführt wird, ein CAM-Programm 240, 400 und fügt anhand der Tabelle der Fig. 5 oder allgemeiner durch Auswählen aus einer Bibliothek Extensions 410, 420 den entsprechenden Programmzeilen des CAM-Programms 240, 400 hinzu.

Alternativ oder parallel dazu fügt das Analyse-Skript eigene Programmzeilen in das CAM-Programm 240, 400 ein (in der Fig. 4 nicht gezeigt), die Einstelloptionen des Überwachungssystems 110, 210 beschreiben. Die Programmzeilen bestimmen Nutzer-definierte Eigenschaften, die in Programmteile des CAM-Programms 240, 400 eingefügt werden, die die entsprechenden Werkzeugpfade beschreiben.

Wie in der Fig. 3 schematisch dargestellt, erzeugt der Postprozessor 260 in automatisierter Form ein Steuerprogramm 270 für den IR 150, 250. Parallel oder sequentiell zu dem Postprozessor 260 identifiziert beispielsweise ein Einfüge-Skript die Extensions 410, 420 des CAM-Programms 240, 400 und fügt in das Steuerprogramm 270 für den IR 150, 250 eine oder mehrere Überwachungsanweisungen ein, die das Überwachungssystem 110, 210 für den Bearbeitungsprozess 290 konfigurieren.

Die Fig. 13 zeigt einen Ausschnitt aus einem Steuerprogramm 1300, das sich auf die Extension 410 des CAM-Programms 400 der Fig. 4 bezieht. Die Bedeutung der Extension 410 mit der Kennung 02 ist oben während der Diskussion der Tabelle der Fig. 5 ausführlich erläutert worden. In dem Beispiel der Fig. 13 bewirkt die Extension 410 mit der Kennung 02 das Einfügen der vier maschinenspezifischen Überwachungsanweisungen 1310, 320, 330, 340 in das Steuerprogramm 1300. Die Überwachungsanweisungen 1310-1340 sind in dem Programmausschnitt 1300 der Fig. 13 durch gestrichelte Rechtecke hervorgehoben, im Gegensatz zu den anderen Anweisungen des Programmausschnittes 1300, die sich auf die Steuerung der Werkzeugmaschine 150, 250 beziehen.

Die Überwachungsanweisungen 1310 und 1320 beschreiben Anweisungen der H-Funktion des NC-Codes, der gemäß der DIN 66025 erstellt wurde und geben die Konfiguration an, mit der überwacht werden soll.

Die M-Funktion M131 der Überwachungsanweisung 1330 der Fig. 13 schaltet die 'aktive Kontrolle' ein (siehe zweite Spalte der Tabelle der Fig. 5) und die M-Funktion der Überwachungsanweisung 1340 schaltet die 'aktive Kontrolle' am Ende des Bearbeitungsschritts des Bearbeitungsprozesses 290 wieder aus.

Die Zuweisung der Überwachungsanweisungen 1310, 1320, 1330, 1340 zu den Extensions 410, 420 (mit den Kennungen 01 bis 18 in der Tabelle der Fig. 5) des CAM-Programms 240, 400 können in einer weiteren oder zweiten Bibliothek gespeichert sein, auf die der Postprozessor 260 oder ein Einfüge-Skript zugreifen kann. Alternativ kann ein auf dem Prozessor des CAM-Systems 230 ablaufendes Applikationsprogramm aus den identifizierten Extensions 410, 420 des CAM-Programms 240, 400 die zugehörigen Überwachungsanweisungen 1310-1340 bestimmen. Anstatt auf dem Prozessor des CAM-Systems 230 abzulaufen, kann das Applikationsprogramm auch auf einem externen Prozessor oder Computersystem ausgeführt werden. Schließlich ist es auch denkbar, einen Teil der Überwachungsanweisungen 1310-1340 aus einer Bibliothek zu beziehen und einen zweiten Teil, wie oben erläutert, mittels eines Applikationsprogramms zu ermitteln. Das Applikationsprogramm kann beispielsweise in Form einer Dynamic Link Library (DLL) ausgeführt werden.

In den bisher beschriebenen Ausführungsbeispielen eines in der vorliegenden Anmeldung definierten Verfahrens zum Bereitstellen einer Überwachungsfunktion für einen von einem Industrieroboter 150, 250 ausgeführten Bearbeitungsprozesses 290 erhält das Überwachungssystem 110, 210 mittels der Überwachungsanweisung(en) 1310-1340 des Steuerprogramms 270, 400 genaue Instruktion, wie es die einzelnen Bearbeitungsschritte des Bearbeitungsprozesses 290 überwachen muss. Den Überwachungsanweisungen 1310-1340 folgend, führt das Überwachungssystem 110, 210 die vorgegebenen Einstellungen durch und überwacht anschließend die einzelnen Bearbeitungsschritte des Bearbeitungsprozesses 290.

Moderne Überwachungssysteme 110, 210 weisen jedoch einen eigenen Prozessor und einen nichtflüchtigen Speicher auf (in der Fig. 3 nicht gezeigt). Damit sind moderne Überwachungssysteme 110, 210 in der Lage ihre Einstellungen oder Konfigurationsdaten teilweise selbst zu bestimmen.

In einer alternativen Ausführung zum Bereitstellen einer Überwachungsfunktion ist es deshalb möglich, in den Extensions 410, 420 des CAM-Programms 240, 400 Parameterwerte für das Einstellen der Überwachungsfunktion sowie die Anweisung an das Überwachungssystem 110, 210 zu übertragen, den entsprechenden Teil des Steuerprogramms 270, 1300 zu analysieren. Das Überwachungssystem 110, 210 kann anhand dieser Vorgaben die entsprechenden Einstellungen für die einzelnen Bearbeitungsschritte des Bearbeitungsprozesses 290 selbst bestimmen. Beispielsweise kann die im Steuerprogramm 270, 1300 niedergelegte Anweisung 1310-1340 zum Bewegen einer Achse des Manipulators 155 des IR 150, 250 (zum Beispiel der Vorschubbewegung für die Spindel 161 in der Fig. 1) zu der Signalauswahl dieser Achse für die Überwachung führen. Dazu übersetzt der Postprozessor 260 die Extensions 410, 420 des CAM-Programms 240, 400 in maschinenspezifische Anweisungen 1310-1340 des Steuerprogramms 270, 1300.

Zum Beispiel kann die Bewegungsart jeder Achse des Manipulators 155 des IR 150, 250 wie positiv schnell (Go), positiv langsam (Gx), keine Bewegung (Gx), negativ langsam (Gx) und schließlich negativ schnell (Go) in einer Maske in dem Überwachungssystem 110, 210 hinterlegt werden und als Unterscheidungshilfe bei der Analyse des entsprechenden Teils des Steuerprogramms 270, 300 durch das Überwachungssystem 110, 210 herangezogen werden.

Aus einem in dem Steuerprogramm 270, 1300 angeordneten Grobbearbeitungsteilschritt (Schruppen) für den IR 150, 250 bestimmt das Überwachungssystem 110, 210 eine Überwachung mit weiten Grenzen, wie etwa der in der Fig. 8 angegebenen festen oberen Grenze 810.

Umgekehrt führt hingegen ein entsprechender Feinbearbeitungsteilschritt (Schlichten) zum Bestimmen einer Überwachung mit engen Grenzen durch das Überwachungssystem 110, 210, wie beispielhaft durch die oberen Hüllkurven 710 der Fig. 7 bzw. 910 der Fig. 9 veranschaulicht.

Die zur Überwachung einsetzten Grenzen (beispielsweise feste untere und/oder feste obere Grenzen oder untere und/oder obere Hüllkurven können in den Überwachungsanweisungen 1310-1340 dem Überwachungssystem 110, 210 als Grenzwerte oder als Parameterwerte übertragen werden. Im zuletzt genannten Fall bestimmt das Überwachungssystem 110, 210 aus den Parameterwerten die zur Überwachung verwendeten Grenzwerte.

Dem Überwachungssystem 110, 210 können ferner der verwendete Werkzeugtyp und die Größe des verwendeten Werkzeugs 164 anhand von Werkzeugnummern übermittelt werden. Die Bearbeitungsart, sowie der Fortschritt innerhalb eines Bearbeitungsschritts (Grobbearbeitungsteilschritt oder Schrubben bzw. Feinbearbeitungsteilschritt oder Schlichten) können dem Überwachungssystem 110, 210 in Form eines Nummernschlüssels übertragen werden.

Überdies ist es möglich, dem Überwachungssystem 110, 210 via Extensions 410, 420 des CAM-Programms 240, 400 und eingefügten Überwachungsanweisungen 1310-1340 des Steuerprogramms 270, 1300 die Parameter für die Regeleigenschaften des Überwachungssystems 110, 210 zu übermitteln. Das Überwachungssystem 110, 210 berechnet aus diesen Vorgaben auf der Basis beispielsweise eines in seinem Speicher abgelegten Algorithmus die für den jeweiligen Bearbeitungsschritt des Bearbeitungsprozesses 290 günstigsten Einstellungen.

In dem zuletzt ausgeführten Beispiel führt das Überwachungssystem 110, 210 nicht sklavisch die Überwachungsanweisungen 1310-1340 aus, sondern konfiguriert sich aufgrund der durch die Überwachungsanweisungen 1310-1340 übertragenen Parameterwerte und durch Analyse des Steuerprogramms 270, 300 weitgehend selbst. Dadurch kann zumindest ein Teil der in der ersten Bibliothek gespeicherten Daten oder der durch das Applikationsprogramm ermittelten Daten durch das Überwachungssystem 110, 210 selbst bestimmt werden und muss nicht übertragen werden. Darüber hinaus ist es möglich, jede Mischform zwischen dem zuerst beschriebenen Beispiel (das Überwachungssystem 110, 210 setzt die Überwachungsanweisungen 1310-1340 um) und dem zuletzt erläuterten Ausführungsbeispiel (das Überwachungssystem 110, 210 erhält Parameterwerte und konfiguriert sich anhand dieser Werte und des Steuerprogramms 270, 300 weitgehend selbst) zu realisieren.

Das in der vorliegenden Beschreibung ausgeführte Verfahren zum Bereitstellen einer Überwachungsfunktion weist zwei wichtige Vorzüge auf: (i) Die Einstellungen der Überwachungsfunktion erfolgen durch Experten in der CAM-Umgebung anstelle des Einstellens der Überwachungsfunktion vor Ort am Industrieroboter selber. (ii) Das definierte Verfahren ermöglicht ein weitgehend automatisiertes Einstellen der Überwachungsfunktion.

## Patentansprüche

1. Verfahren zum automatisierten Bereitstellen einer Überwachungsfunktion für einen Bearbeitungsprozess (290), der von einem Industrieroboter (150, 250) durchgeführt werden soll, mit den folgenden Schritten:
a. Analysieren eines Computer-Aided Manufacturing, CAM, Programms (240, 400) des Bearbeitungsprozesses (290) mit Hilfe eines Postprozessors (260) auf Bearbeitungsschritte, die überwacht werden sollen; und
b. Einfügen zumindest einer Überwachungsanweisung (1310, 1320,1330,1340) in ein Steuerprogramm (270, 1300) des Industrieroboters (150, 250) durch den Postprozessor (260), die beim Durchführen des Bearbeitungsprozesses (290) ausgeführt wird.

2. Verfahren nach Anspruch 1, wobei das Analysieren des CAM-Programms (270, 1300) das Ausführen zumindest eines Analyse-Skripts durch den Postprozessor (260) umfasst.

3. Verfahren nach Anspruch 1 oder 2, wobei der Postprozessor (260) im Schritt a. Extensions (410, 420) von Werkzeugpfaden des CAM-Programms (240, 400) und/oder in Werkzeugpfaden des CAM-Programms (240, 400) vorhandene Nutzer-definierte Eigenschaften auswertet.

4. Verfahren nach Anspruch 3, wobei die Extensions (410, 420) der Werkzeugpfade des CAM-Programms (240, 400) und/oder die in Werkzeugpfaden des CAM-Programms vorhandenen Nutzer-definierten Eigenschaften einen Betriebsmodus des Überwachungssystems (110, 210) und/oder eine Qualitätseinstellung des Überwachungssystems (110, 210) und/oder ein Erzeugen eines Alarmereignisses betreffen.

5. Verfahren nach Anspruch 3 oder 4, wobei die Extensions (410, 420) der Werkzeugpfade des CAM-Programms (240, 400) und/oder die in Werkzeugpfaden des CAM-Programms (240, 400) vorhandenen Nutzer-definierten Eigenschaften beim Erzeugen des CAM-Programms (240, 400) aus CAD-Daten hinzugefügt werden.

6. Verfahren nach einem der Ansprüche 3 - 5, wobei die Extensions (410, 420) der Werkzeugpfade des CAM-Programms (240) und/oder die in Werkzeugpfaden des CAM-Programms (240, 400) vorhandenen Nutzer-definierten Eigenschaften aus einer ersten Bibliothek ausgewählt werden.

7. Verfahren nach einem der vorhergehenden Ansprüche, wobei das Einfügen der zumindest einen Überwachungsanweisung (1310, 1320,1330,1340) im Schritt b. das Ausführen zumindest eines Einfüge-Skripts durch den Postprozessor (260) umfasst.

8. Verfahren nach einem der vorhergehenden Ansprüche, wobei das Einfügen der zumindest einen Überwachungsanweisung (1310, 1320, 1330, 1340) in das Steuerprogramm (270, 1300) das Einfügen zumindest einer H-Funktion und/oder zumindest einer M-Funktion in das Steuerprogramm (270, 1300) umfasst.

9. Verfahren nach einem der Ansprüche 1-3 und 7-8, wobei die zumindest eine Überwachungsanweisung (1310,1320,1330,1340) das Überwachungssystem (110, 210) anweist, Einstellungen des Überwachungssystems (110, 210) aus Anweisungen des Steuerprogramms (270, 1300) des Industrieroboters (150, 250) und/oder aus Parameterwerten, die mit der zumindest einen Überwachungsanweisung (1310, 1320, 1330, 1340) übertragen werden, zu bestimmen.

10. Verfahren nach einem der Ansprüche 1-3 und 7-8, wobei die zumindest eine Überwachungsanweisung (1310, 1320, 1330, 1340) Grenzwerte für einen Variationsbereich einer Größe übergibt, die das Überwachungssystem (110, 210) zur Überwachung verwendet und/oder Parameterwerte zum Bestimmen von Grenzwerten übergibt, aus denen das Überwachungssystem (110, 210) die Grenzwerte ermittelt.

11. Verfahren nach einem der Ansprüche 1-3 und 7-10, ferner aufweisend Einstellen von Regeleigenschaften des Überwachungssystems (110, 210) nach Vorgaben, die von der zumindest einen Überwachungsanweisung (1310, 1320, 1330, 1340) an das Überwachungssystem (110, 210) übergeben werden.

12. Vorrichtung zum automatisierten Bereitstellen einer Überwachungsfunktion für einen Bearbeitungsprozess (290), der von einem Industrieroboter (150, 250) durchgeführt werden soll, aufweisend:
a. Mittel zum Analysieren eines Computer-Aided Manufacturing, CAM, Programms (240, 400) des Bearbeitungsprozesses (290) mit Hilfe eines Postprozessors (260) auf Bearbeitungsschritte, die überwacht werden sollen; und
b. Mittel zum Einfügen zumindest einer Überwachungsanweisung (1310, 1320, 1330, 1340) in ein Steuerprogramm (270, 1300) des Industrieroboters (150, 250) durch den Postprozessor (260), die beim Durchführen des Bearbeitungsprozesses (290) ausgeführt wird.

13. Vorrichtung nach Anspruch 12, wobei die Mittel zum Analysieren des CAM-Programms (240, 400) und die Mittel zum Einfügen der zumindest einen Überwachungsanweisung (1310, 1320, 1330, 1340) einen Prozessor umfassen.

14. Vorrichtung nach Anspruch 12 oder 13, wobei die Vorrichtung ausgebildet ist, um ein Verfahren nach einem der Ansprüche 1 bis 16 auszuführen.

15. Computerprogramm mit Anweisungen zum Durchführen aller Schritte des Verfahrens nach einem der Ansprüche 1 bis 11, wenn das Computerprogramm in der Vorrichtung nach Anspruch 12 ausgeführt wird.

## Claims

1. A method for an automated provision of a monitoring function for a processing process (290) which is to be performed by an industrial robot (150, 250), wherein the method comprises the following steps:
a. analyzing a computer aided manufacturing, CAM, program (240, 400) of the processing process (290) with respect to processing steps which are to be monitored by means of a post processor (260); and
b. inserting at least one monitoring instruction (1310, 1320, 1330, 1340) which is executed when performing the processing process (290) into a control program (270, 1300) of the industrial robot (150, 250) by means of the post processor (260).

2. The method according to claim 1, wherein said analyzing the CAM program (270, 1300) comprises executing at least one analysis script by the post processor (260).

3. The method according to claim 1 or 2, wherein, in step a., the post processor (260) evaluates extensions (410, 420) of tool paths of the CAM program (240, 400) and / or user defined settings available in tool paths of the CAM program (240,400).

4. A method according to claim 3, wherein the extensions (410, 420) of the tool paths of the CAM program (240, 400) and / or the user defined settings available in the tool paths of the CAM program relates to an operation mode of the monitoring system (110, 210), and / or to a quality setting of the monitoring system (110, 210), and / or to generating of an alarm event.

5. A method according to claim 3 or 4, wherein the extensions (410, 420) of the tool paths of the CAM program (240, 400) and / or user defined settings available in the tool paths of the CAM program (240, 400) are added from CAD data when generating the CAM program (240, 400).

6. The method according to one of the claims 3 to 5, wherein the extensions (410, 420) of the tool paths of the CAM program (240) and / or the user defined settings available in the tool paths of the CAM program (240, 400) are selected from a first library.

7. The method according to any one of the preceding claims, wherein, in step b., inserting said at least one monitoring instruction (1310, 1320, 1330, 1340) comprises executing at least one insertion script by the post processor (260).

8. The method according to any one of the preceding claims, wherein inserting the at least one monitoring instruction (1310, 320, 330, 340) into the control program (270, 1300) comprises inserting at least one H function and / or at least one M function into the control program (270, 300).

9. The method according to one of the claims 1-3 and 7-8, wherein the at least one monitoring instruction (1310, 1320, 1330, 1340) instructs the monitoring system (110, 210) to determine settings of the monitoring system (110, 210) from instructions of the control program (270, 1300) of the industrial robot (150, 250) and /or from parameter values which are transmitted with the at least one monitoring instruction (1310, 1320, 1330, 1340).

10. The method according to one of the claims 1-3 and 7-8, wherein the at least one monitoring instruction (1310, 1320, 1330, 1340) transfers limit values for a variation range of a quantity which is used by the monitoring system (110, 210) for monitoring purposes and / or transfers parameter values for determining limit values from which the monitoring system (110, 210) determines the limit values.

11. The method according to one of the claims 1-3 and 7-10, further comprising setting control characteristics of the monitoring system (110, 210) according to specifications which are transmitted to the monitoring system (110, 210) by the at least one monitoring instruction (1310, 1320, 1330, 1340).

12. An apparatus for an automated provision of a monitoring function for a processing process (290) which is to be performed by an industrial robot (150, 250) comprising:
a. means for analyzing a computer aided manufacturing, CAM, program (240,400) of the processing process (290) with respect to processing steps which are to be monitored by means of a post processor (260); and
b. means for inserting at least one monitoring instruction (1310, 1320, 1330, 340) which is executed when performing the processing process (290) into a control program (270, 1300) of the industrial robot (150, 250) by means of the post processor (260).

13. The apparatus according to claim 12, wherein the means for analyzing the CAM program (270, 400) and the means for inserting the at least one monitoring instruction (1310, 1320, 1330, 1340) comprise a processor.

14. The apparatus according to claim 12 or 13, wherein the apparatus is adapted to perform a method according to one of the claims 1 to 11.

15. A computer program with instructions for performing all steps of the method of any one of the claims 1 to 11 when the computer program is executed in the apparatus of claim 12.

## Revendications

1. Procédé de mise à disposition automatisée d'une fonction de surveillance pour un processus d'usinage (290) qui doit être réalisé par un robot industriel (150, 250), comprenant les étapes suivantes :
a. analyse d'un programme de fabrication assistée par ordinateur, FAO, (240, 400) du processus d'usinage (290), à l'aide d'un postprocesseur (260), portant sur des étapes d'usinage qui doivent être surveillées ; et
b. insertion d'au moins une instruction de surveillance (1310, 320, 330, 1340) dans un programme de commande (270, 1300) du robot industriel (150, 250) par l'intermédiaire du postprocesseur (260), laquelle doit être exécutée lors de la réalisation du processus d'usinage (290).

2. Procédé selon la revendication 1, l'analyse du programme de FAO (270, 1300) comprenant l'exécution au moins d'un script d'analyse par le postprocesseur (260).

3. Procédé selon la revendication 1 ou 2, le postprocesseur (260) analysant, à l'étape a., des extensions (410, 420) de trajets d'outil du programme de FAO (240, 400) et/ou des propriétés définies par l'utilisateur présentes dans des trajets d'outil du programme de FAO (240, 400).

4. Procédé selon la revendication 3, les extensions (410, 420) des trajets d'outil du programme de FAO (240, 400) et/ou les propriétés définies par l'utilisateur présentes dans des trajets d'outil du programme de FAO concernant un mode de fonctionnement du système de surveillance (110, 210) et/ou un réglage de qualité du système de surveillance (110, 210) et/ou une génération d'un événement d'alarme.

5. Dispositif selon la revendication 3 ou 4, les extensions (410, 420) des trajets d'outil du programme de FAO (240, 400) et/ou les propriétés définies par l'utilisateur présentes dans des trajets d'outil du programme de FAO (240, 400) étant ajoutées lors de la génération du programme de FAO (240, 400) à partir de données de FAO.

6. Procédé selon une des revendications 3 à 5, les extensions (410, 420) des trajets d'outil du programme de FAO (240) et/ou les propriétés définies par l'utilisateur présentes dans des trajets d'outil du programme de FAO (240, 400) étant sélectionnées dans une première bibliothèque.

7. Procédé selon une des revendications précédentes, l'insertion de la au moins une instruction de surveillance (1310, 1320, 1330, 1340) à l'étape b. comprenant l'exécution au moins d'un script d'insertion par le postprocesseur (260).

8. Procédé selon une des revendications précédentes, l'insertion de la au moins une instruction de surveillance (1310, 1320, 1330, 1340) dans le programme de commande (270, 1300) comprenant l'insertion au moins d'une fonction H et/ou au moins d'une fonction M dans le programme de commande (270, 1300).

9. Procédé selon une des revendications 1 à 3 et 7 à 8, la au moins une instruction de surveillance (1310, 1320, 1330, 1340) ordonnant au système de surveillance (110, 210) de déterminer des réglages du système de surveillance (110, 210) à partir d'instructions du programme de commande (270, 1300) du robot industriel (150, 250) et/ou à partir de valeurs paramétriques qui sont transmises avec la au moins une instruction de surveillance (1310, 1320, 330, 1340).

10. Procédé selon une des revendications 1 à 3 et 7 à 8, la au moins une instruction de surveillance (1310, 1320, 1330, 1340) transmettant des valeurs limites pour une plage de variation d'une dimension qu'utilise le système de surveillance (110, 210) pour la surveillance et/ou transmettant des valeurs paramétriques pour déterminer des valeurs limites, à partir desquelles le système de surveillance (110, 210) détecte les valeurs limites.

11. Procédé selon une des revendications 1 à 3 et 7 à 10, comportant en outre le réglage de propriétés de régulation du système de surveillance (110, 210) selon des prescriptions qui sont transmises par la au moins une instruction de surveillance (1310, 1320, 1330, 1340) au système de surveillance (110, 210).

12. Dispositif de mise à disposition automatisée d'une fonction de surveillance pour un processus d'usinage (290) qui doit être réalisé par un robot industriel (150, 250), comprenant :
a. des moyens pour procéder à une analyse d'un programme de fabrication assistée par ordinateur, FAO, (240, 400) du processus d'usinage (290), à l'aide d'un postprocesseur (260), portant sur des étapes d'usinage qui doivent être surveillées ; et
b. des moyens pour insérer au moins une instruction de surveillance (1310, 1320, 1330, 1340) dans un programme de commande (270, 1300) du robot industriel (150, 250) par l'intermédiaire du postprocesseur (260), laquelle doit être exécutée lors de la réalisation du processus d'usinage (290).

13. Dispositif selon la revendication 12, les moyens pour procéder à une analyse du programme de FAO (240, 400) et les moyens pour insérer au moins une instruction de surveillance (1310, 1320, 1330, 1340) comprenant un processeur.

14. Dispositif selon la revendication 12 ou 13, le dispositif étant conçu pour exécuter un procédé selon une des revendications 1 à 16.

15. Programme informatique avec des instructions pour réaliser toutes les étapes du procédé selon une des revendications 1 à 11 lorsque le programme informatique est exécuté dans le dispositif selon la revendication 12.
